# EUROPÄISCHE PATENTSCHRIFT

(11) **EP 4 182 846 B1**
(45) Veröffentlichungstag und Bekanntmachung des Hinweises auf die Patenterteilung: **07.01.2026**
(21) Anmeldenummer: 21746679.6
(22) Anmeldetag: 16.07.2021
(51) Int. Cl.: G06K 19/077, G06K 19/07, G07D 7/01, G07D 7/06, B42D 25/23, B42D 25/305

(54) **LAMINATIONSKÖRPER MIT AKTIVIERBAREM AKTUATOR UND VERFAHREN ZUR VERIFIKATION DES LAMINATIONSKÖRPERS**
LAMINATION BODY COMPRISING AN ACTIVATABLE ACTUATOR, AND METHOD FOR VERIFYING THE LAMINATION BODY
CORPS DE STRATIFICATION COMPRENANT UN ACTIONNEUR ACTIVABLE, ET PROCÉDÉ DE VÉRIFICATION DU CORPS DE STRATIFICATION

(30) Priorität: 17.07.2020 DE 102020209012
(43) Veröffentlichungstag der Anmeldung: 24.05.2023
(73) Patentinhaber: Bundesdruckerei GmbH, 10969 Berlin (DE)
(72) Erfinder: BIELESCH, Ulrich, 56132 Frücht (DE); RÖTZER, Martin, 85229 Markt Indersdorf (DE); MAUDERER, Michael, 81825 München (DE)
(74) Vertreter: Patentanwälte Bressel und Partner mbB
(86) Internationale Anmeldenummer: PCT/EP2021/069948
(87) Internationale Veröffentlichungsnummer: WO 2022/013418

(56) Entgegenhaltungen:
- DE-A1- 102004 059 465
- DE-A1- 102005 039 320
- DE-A1- 102011 013 132

## Beschreibung

Die Erfindung betrifft einen Laminationskörper, insbesondere einen als Sicherheitsdokument oder Sicherheitsdokumentenrohling ausgebildeten Laminationskörper, der ein Sicherheitsmerkmal umfasst, dessen Zustand über äußere Einwirkung reversibel veränderbar ist, und ein Verfahren zur Verifikation des Laminationskörper unter Ausnutzung der herbeiführbaren Zustandsänderung.

Aus dem Stand der Technik ist es bekannt, Sicherheitsdokumente, beispielsweise Personalausweise, Identitätskarten, Führerscheine, in Pässe eingebundene Passkarten, Geldkarten, Telefonkarten, Zugangsberechtigungskarten, Firmenausweise usw., als Laminationskörper mit darin und daran ausgebildeten Sicherheitsmerkmalen auszubilden.

Ein Laminationskörper besteht hierbei aus einer Mehrzahl von selbsttragenden Substratschichten, die übereinandergeschichtet und miteinander zu dem Laminationskörper verbunden sind. In der Regel sind die Substratschichten in einem Hochdruck-Hochtemperatur-Laminationsverfahren miteinander verbunden. Für ein solches Verbindungsverfahren eignen sich insbesondere thermoplastische und teilweise auch thermoelastische Kunststoffschichten. Einzelne Schichten können hierbei auch aus anderen Materialien wie beispielsweise Fasermaterialien wie Papier oder ähnlichem hergestellt sein. Besonders bevorzugt werden jedoch Laminationskörper, bei denen die miteinander verbundenen selbsttragenden Substratschichten alle aus einem Kunststoffmaterial, besonders bevorzugt aus demselben Kunststoffmaterial bestehen, d.h. auf Basis desselben Polymers hergestellt sind. Zwischen und in die Schichten können weitere Komponenten eingefügt sein.

Um die Echtheit und Unverfälschtheit eines solchen Laminationskörpers überprüfen zu können, d.h. verifizieren zu können, ob der Laminationskörper echt und unverfälscht ist, wird der Laminationskörper mit einem oder in der Regel mehreren Sicherheitsmerkmalen versehen.

Ein Sicherheitsmerkmal ist hierbei ein Merkmal, welches geeignet ist, die Echtheit und/oder Unverfälschtheit eines Gegenstands überprüfbar zu machen.

Ein Gegenstand, der mindestens ein Sicherheitsmerkmal umfasst, wird hier auch als Sicherheitselement bezeichnet.

Aus dem Stand der Technik sind viele verschiedene Sicherheitsmerkmale bekannt. Eine Reihe von Sicherheitsmerkmalen können optisch überprüft werden. Dies bedeutet, dass ein menschlicher Betrachter oder eine Vorrichtung mit einer optischen Erfassungseinrichtung in der Lage ist, das entsprechende Sicherheitsmerkmal zu verifizieren. Hierzu gehören beispielsweise Hologramme, Lasermarkierungen, optisch variable Tinten, Aufdrucke, in den Laminationskörper integrierte Lumineszenzmittel usw., um nur einige aufzuzählen.

Bei anderen Sicherheitsmerkmalen können andere elektromagnetische und/oder haptische und/oder taktile Verfahren und Effekte genutzt werden, um diese anderen Sicherheitsmerkmale hinsichtlich ihrer Existenz und/oder Unverfälschtheit und Echtheit zu überprüfen.

Darüber hinaus sind Sicherheitsmerkmale bekannt, die auf äußere Anregung einen bestimmten Effekt zeigen.

Sicherheitsmerkmale werden so ausgebildet, dass diese möglichst schwer nachzuahmen oder nachzubilden sind, sodass Fälscher diese möglichst nicht herstellen oder nachahmen können, und sie dennoch einfach und zuverlässig verifiziert werden können.

Hierbei werden Sicherheitsmerkmale danach unterschieden, ob zu deren Verifikation Hilfsmittel benötigt werden oder ob diese durch einen Menschen ohne zusätzliche Hilfsmittel verifiziert werden können. Sicherheitsmerkmale einer sogenannten Kategorie eins können ohne Zuhilfenahme von Werkzeugen oder Hilfsmitteln verifiziert werden. Hierzu gehören beispielsweise Lasermarkierungen, mit Lasermarkierungen ausgebildete Kippbilder wie CLI (changable laser image) oder MLI (multiple laser image) oder auch spezielle Sicherheitsdrucke usw.

Als Kategorie zwei Sicherheitsmerkmale werden solche bezeichnet, zu deren Verifikation Hilfsmittel benötigt werden. Hierunter fallen beispielsweise Sicherheitsmerkmale, welche mit Lumineszenzmittel ausgebildet sind, die nur mit Licht im nicht sichtbaren Wellenlängenbereich anregbar sind, wie auch in einem Mikrochip gespeicherte Informationen, die beispielsweise über ein kontaktlos mit dem Laminationskörper in Wechselwirkung tretendes Lesegerät abgefragt werden können.

Beispielsweise sind moderne Reisepässe und Personalausweise mit einer Schaltungsanordnung, in der Regel in Form eines Mikrochips, ausgebildet, die mit einer in der Regel spiralförmig ausgebildeten Antennenstruktur verbunden ist. Über eine Einstrahlung von elektromagnetischer Strahlung kann in die Antennenstruktur Strom induziert werden, mit dem die Schaltungsanordnung bestromt wird. Diese kann beispielsweise eine mit der Antennenstruktur verbundene Last gezielt schalten, sodass die von der Antennenstruktur dem elektromagnetischen Feld entnommene Energie abhängig von der Last variiert wird. Diese Änderung kann das Lesegerät, welches die elektromagnetische Strahlung erzeugt, detektieren, sodass die Schaltungsanordnung hierüber Informationen an das Lesegerät übermitteln kann. Darüber hinaus ist die Schaltungsanordnung in der Regel ausgebildet, eine Modulation der elektromagnetischen Strahlung des Lesegeräts zu demodulieren und ihrerseits von dem Lesegerät übertragene Informationen zu erfassen und auszuwerten und/oder weiter zu verarbeiten.

Die DE102004059465A1 beschreibt ein Sicherheitselement in Form eines flexiblen, mehrschichtigen Folienkörpers sowie ein Erkennungssystem mit einem derartigen Sicherheitselement. Das Sicherheitselement weist eine Empfangseinheit zum Empfangen eines eine spezifische Kodierung enthaltenen elektromagnetischen Verifikationssignals von einer Verifikationseinrichtung, eine Ausgabeeinheit zur Ausgabe eines Freigabesignals und eine aktive und/oder passive organische Bauelemente aufweisende Freischalteelektronik auf. Die Freischalteelektronik überprüft, ob ein von der Empfangseinheit empfangenes Signal die spezifische Kodierungen enthält oder nicht enthält und steuert die Ausgabeeinheit zur Ausgabe des Freigabesignals an, wenn das von der Empfangseinheit empfangene Signal die spezifische Kodierung enthält.

Die DE102011013132A1 beschreibt ein elektrochromes Modul bestehend aus einem Grundkörper, mindestens zwei Elektroden, einem elektrochromen Polymer und einem Elektrolyt, wobei das elektrochrome Polymer ein Tetraarylbenzidin-Diol Kondensationspolymer ist, wobei ein polymerer Gel-Elektrolyt verwendet wird, wobei eine Ionenspeicherschicht angewendet wird

Die DE102005039320A1 beschreibt einen kartenförmigen Datenträger mit einem Kartenkörper, auf dem ein graphisches Element dargestellt ist. Der Kartenkörper weist ein Kunststoffmaterial zur Umwandlung von eingestrahltem Licht in Sekundärlicht und zur Weiterleitung des Sekundärlichts innerhalb des Kunststoffmaterials zum graphischen Element oder zu einem Teilbereich des graphischen Elements auf. Der kartenförmige Datenträger zeichnet sich dadurch aus, dass ein durch das Kunststoffmaterial gebildeter Formkörper zur Darstellung des graphischen Elements wenigstens teilweise in wenigstens einer Ausnehmung des Kartenkörpers angeordnet ist und/oder ein lateral ausgedehntes Gebiet aufweist, innerhalb dessen der Formkörper andere optische Eigenschaften als außerhalb des Gebiets besitzt.

In einigen Situationen ist es wünschenswert, dass ein Verifikationsprozess zwar einfach auszuführen ist, jedoch nicht von Unbefugten oder ohne eine Zustimmung beispielsweise eines Nutzers des Laminationskörpers oder eines Herstellers oder einer ausgebenden Institution des Laminationskörpers oder einer anderen vertrauenswürdigen Institution ausführbar ist.

Der Erfindung liegt die technische Aufgabe zugrunde, einen Laminationskörper mit einem verbesserten Sicherheitsmerkmal zu schaffen, welches einfach zu verifizieren ist, und insbesondere geeignet ist, nur bei Vorliegen einer Verifikationsinformation verifizierbar zu sein.

Der Erfindung liegt die Idee zugrunde, mit einer in einen Laminationskörper integrierten Antennenstruktur einen Aktuator zu koppeln, welcher bei Einstrahlung von elektromagnetischer Strahlung mittels des in die Antennenstruktur induzierten Stroms gesteuert durch eine ebenfalls mit der Antennenstruktur gekoppelte Schaltungsanordnung in einen bestromten Zustand versetzt werden kann, in dem dieser mindestens eine physikalische, von außen erfassbare Eigenschaft des Laminationskörpers gegenüber dem nicht-bestromten Zustand des Aktuators verändert. Die Schaltungsanordnung ist ausgebildet, zumindest eine in die elektromagnetische Hochfrequenzstrahlung modulierte Verifikationsinformation zu demodulieren und auszuwerten, wobei die Schaltungsanordnung ausgebildet ist, beim Auswerten die demodulierte Verifikationsinformation mit Vorgaben zu vergleichen und der Aktuator nur in den einen bestromten Zustand zu schalten, wenn die demodulierte Verifikationsinformation den Vorgaben entspricht.

Die Verifikationssicherheit, dass nur ein echter Laminationskörper auch als ein solcher erkannt wird, kann dadurch gesteigert werden, dass die optische Eigenschaft, die erfasst wird, während der Verifikation gezielt gesteuert verändert wird.

Die Erfindung sieht daher vor, dass die Verifikationsinformation in Form des Verifikationssignals zeitlich variiert wird und ein zeitlicher Verlauf des Erfassungssignals ausgewertet und überprüft wird, ob eine zeitliche Variation des Erfassungssignals mit der zeitlichen Variation des Verifikationssignals oder der hierin kodierten Verifikationsinformation korrespondiert.

Das Verifizieren erfolgt, indem eine elektromagnetische Hochfrequenzstrahlung erzeugt wird, auf welche eine Verifikationsinformation als Verifikationssignal moduliert wird. Es erfolgt ein Einstrahlen der elektromagnetischen Hochfrequenzstrahlung auf einen Laminationskörper in einer Weise, dass die elektromagnetischen Hochfrequenzstrahlung eine Antennenstruktur eines Laminationskörpers durchdringt, sodass in der Antennenstruktur ein Strom induziert wird und eine Schaltungsanordnung des Laminationskörpers mit Energie versorgt wird und das Verifikationssignal und die darin kodierte Verifikationsinformation demoduliert und mit Vorgaben vergleicht und einen Aktuator des Laminationskörpers bestromt, sofern das demodulierte Verifikationssignal den Vorgaben entspricht, und Erfassen mindestens einer Eigenschaft des Dokumentkörpers mittels einer Erfassungseinrichtung, Auswerten der mindestens einen erfassten Eigenschaft, wobei geprüft wird, ob die mindestens eine erfasste Eigenschaft mit einer vorgegebenen oder vorbekannten erwarteten Eigenschaft übereinstimmt, die durch den bestromten Aktuator verursacht ist und als echt verifiziert wird, wenn die mindestens eine erfasste Eigenschaft mit einer erwarteten Eigenschaft übereinstimmt.

### Definitionen

Als Laminationskörper wird hier ein aus mehreren selbsttragenden Substratschichten in einem Hochtemperatur-Hochdruck-Laminationsverfahren zusammengefügter Körper aufgefasst.

Eine selbsttragende Substratschicht ist eine Schicht, die selbstständig ohne andere Schichten in einem Fertigungsprozess verarbeitet werden kann. Selbsttragende Substratschichten sind insbesondere Kunststoffschichten, können jedoch auch aus Fasermaterial gebildete Schichten wie Papier o. ä. sein. Druckschichten, d.h. aufgedruckte Schichten, zur grafischen Gestaltung werden nicht als selbsttragende Schichten angesehen, da sie ohne die Schicht, auf die der Druck aufgebracht ist, nicht existieren können.

Eine Lichtquelle ist eine Einheit, welche in einem bestromten Zustand elektromagnetische Strahlung in Form von Licht emittiert. Die funktionelle Einheit der Lichtquelle, die das Licht erzeugt, wird als Leuchtmittel bezeichnet.

Licht ist elektromagnetische Strahlung im infraroten Wellenlängenbereich, im sichtbaren Wellenlängenbereich und/oder im ultravioletten Wellenlängenbereich.

Als optische Eigenschaft wird eine Eigenschaft eines Gegenstands bezeichnet, die sich mittels Lichts erfassen lässt. Insbesondere sind optische Eigenschaften solche, die Licht beeinflussen, beispielsweise eine Absorption, eine Emission, eine Remission, eine Transmission und/oder Ausbreitung von Licht, eine Polarisation usw. beeinflussen oder verursachen.

Als optisches Erfassen werden all jene Nachweis- und Erfassungsverfahren bezeichnet, bei denen Licht erfasst oder detektiert wird. Neben dem, was ein durchschnittlicher, d.h. gesunder normalsichtiger menschlicher Betrachter mit seinen Augen erfassen kann, wird auch das als optisches Erfassen bezeichnet, welches mit Messeinrichtungen erfolgt, die Licht detektieren.

Als transparent für eine Wellenlänge oder einen Wellenlängenbereich wird ein Material bezeichnet, wenn man mit Licht dieser Wellenlänge oder dieses Wellenlängenbereichs durch das Material hindurch eine Abbildung gemäß der geometrischen Optik ausführen kann. Dies bedeutet, dass das Material Licht der Wellenlänge oder des Wellenlängenbereichs nicht diffus streut oder vollständig absorbiert. "Weißes" oder klares Fensterglas ist transparent für Licht im sichtbaren Wellenlängenbereich. Rot eingefärbtes klares Glas ist somit zumindest im roten Wellenlängenbereich transparent. Ist keine Wellenlänge im Zusammenhang mit dem Begriff transparent angegeben, wird davon ausgegangen, dass die Transparenz zumindest für das sichtbare Licht existiert.

Transluzent ist ein Material, wenn es zwar Licht transmittiert, aber hierbei diffus streut.

Als Hochfrequenzstrahlung wird elektromagnetische Strahlung in Kilohertz bis 1 Terahertz bezeichnet.

Eine LED ist eine Leuchtdiode, welches ein Halbleiterbauelement ist, welches bei Bestromung Licht emittiert. Eine OLED ist eine organische Leuchtdiode, bei der die Leuchtdiode mit einem organischen Halbleitermaterial realisiert ist.

Eine Mehrfarb-LED ist eine Einheit, die auf Basis einer oder mehrerer, in einer Einheit zusammengefasster Halbleiterbauelemente gesteuert Licht in verschiedenen Wellenlängen erzeugt.

Eine Antennenstruktur ist eine leitende Struktur, welche in der Lage ist, eine elektromagnetische Hochfrequenzstrahlung zu empfangen, insbesondere einem mit der Hochfrequenzstrahlung assoziierten elektromagnetischen Hochfrequenzfeld elektrische Energie zu entziehen. Vorzugsweise sind Antennenstrukturen, in Form von einer oder mehreren Leiterschleifen ausgebildet, in die ein Strom induziert wird, wenn elektromagnetische Hochfrequenzstrahlung durch die Leiterschleifen gestrahlt wird.

Ein elektromagnetisches Hochfrequenzfeld ist ein Feld, in dem sich eine von null verschiedener Amplitude eines elektrischen Feldvektors im Zeittransienten ändert, wobei die Änderungsfrequenz eine Hochfrequenz ist. Im Zeittransient kann die Amplitude des elektrischen Feldvektors mehrfach den Wert null, wie jeden anderen auftretenden Wert, annehmen, jedoch nicht konstant null sein oder konstant einen anderen Wert aufweisen.

Ein Aktuator ist eine Einheit, die aktiv ihren von außen erfassbarem Zustand verändern kann. Eine Lichtquelle, ein piezoelektrischer Kristall, schaltbare optische Schichten, wie Flüssigkristallschichten oder elektrochrome Schichten sind mögliche Aktuatoren, die aktiv ihren Zustand zumindest zwischen einem unbestromten und einem bestromten Zustand ändern können.

Als ein Erfassungssignal wird die Zusammenfassung von zu unterschiedlichen Zeitpunkten erfassten Mess- oder Erfassungsergebnisse einer Mess- oder Erfassungseinrichtung bezeichnet. Eine in einer zeitlichen Abfolge gemessene Lichtintensität kann beispielsweise ein Erfassungssignal darstellen.

### Bevorzugte Ausführungsformen

Insbesondere wird ein Laminationskörper geschaffen, der umfasst: eine Antennenstruktur zum Empfangen von elektromagnetischer Hochfrequenzstrahlung,
eine mit der Antennenstruktur gekoppelte Schaltungsanordnung, welche ausgebildet ist, zumindest eine auf die elektromagnetische Hochfrequenzstrahlung modulierte Verifikationsinformation zu demodulieren und auszuwerten,
einen mit der Schaltungsanordnung gekoppelten elektrisch betreibbaren Aktuator, der mittels der Schaltungsanordnung zwischen mindestens einem nicht-bestromten und einem bestromten Zustand umgeschaltet werden kann, in dem der Aktuator mittels eines über die elektromagnetische Hochfrequenzstrahlung in die Antennenstruktur induzierten Stroms bestromt ist, wobei der Aktuator im bestromten Zustand mindestens eine physikalische, von außerhalb des Laminationskörpers erfassbare Eigenschaft des Laminationskörpers gegenüber dem nicht-bestromten Zustand des Aktuators verändert, wobei die Schaltungsanordnung ausgebildet ist, beim Auswerten die demodulierte Verifikationsinformation mit Vorgaben zu vergleichen und der Aktuator nur in den einen bestromten Zustand zu schalten, wenn die demodulierte Verifikationsinformation den Vorgaben entspricht.

Ferner wird eine Verfahren für dessen Verifikation geschaffen, welches die Schritte umfasst:
Erzeugen einer elektromagnetischen Hochfrequenzstrahlung, auf welche eine Verifikationsinformation als Verifikationssignal moduliert wird, Einstrahlen der elektromagnetischen Hochfrequenzstrahlung auf einen Laminationskörper in einer Weise, dass die elektromagnetischen Hochfrequenzstrahlung eine Antennenstruktur des Laminationskörpers durchdringt, sodass in der Antennenstruktur ein Strom induziert wird, und eine Schaltungsanordnung des Laminationskörpers mit Energie versorgt wird und die Schaltungsanordnung das Verifikationssignal demoduliert und die Verifikationsinformation extrahiert und mit Vorgaben vergleicht und einen Aktuator des Laminationskörpers bestromt, sofern die im demodulierten Verifikationssignal kodierte Verifikationsinformation den Vorgaben entspricht, und Erfassen mindestens einer Eigenschaft des Dokumentkörpers, insbesondere mittels einer Erfassungseinrichtung, Auswerten der mindestens einen erfassten Eigenschaft, wobei geprüft wird, ob die mindestens eine erfasste Eigenschaft mit einer vorgegebenen oder vorbekannten erwarteten Eigenschaft übereinstimmt, die durch den bestromten Aktuator verursacht ist und als echt verifiziert wird, wenn die mindestens eine erfasste Eigenschaft mit einer erwarteten Eigenschaft übereinstimmt.

Eine autorisierte Institution kann hierfür die Verifikationsinformation und/oder das Verifikationssignal bereitstellen.

Der Vorteil der Erfindung besteht darin, dass insgesamt ein Laminationskörper geschaffen wird, der eine von außen erfassbare Antwort auf eine Anregung bei einer Verifikation mit einer Hochfrequenzstrahlung erzeugt, jedoch nur, wenn eine für die Verifikation vorgesehene korrekte bzw. bestimmten Vorgaben entsprechende Verifikationsinformation zu einer Schaltungsanordnung des Laminationskörpers übermittelt wird. Eine für die Verifikation notwendige von außen erfassbare physikalische Eigenschaft ändert sich somit bei der Verifikation nur, wenn die Verifikationsinformation beispielsweise einen Code oder eine Schaltinformation umfasst, der bzw. die mit einem in der Schaltungsanordnung gespeicherten Code bzw. einer gespeicherten Schaltinformation übereinstimmt.

Die Schaltinformation oder der Code können beispielsweise in der Verifikationsinformation verschlüsselt sein. Die Schaltungsanordnung kann eine kryptografische Einheit umfassen, die die Verifikationsinformation einer kryptografischen Entschlüsselung unterzieht. Die Verschlüsselung kann auf einem asymmetrischen oder auch symmetrischen Verfahren beruhen. Bei einem symmetrischen Verfahren wird derselbe Schlüssel zum Verschlüsseln und Entschlüsseln verwendet. Bei einem asymmetrischen Verfahren kann mit einem Schlüssel die Verschlüsselung und mit einem anderen Schlüssel die Entschlüsselung erfolgen. Beispielsweise kann eine Instanz mit einem ersten Schlüssel, oft als geheimen Schlüssel bezeichnet, die Schaltinformation oder den Code in die Verifikationsinformation verschlüsseln. Mit einem zweiten Schlüssel, oft auch als öffentlicher Schlüssel bezeichnet, der in der Schaltungsanordnung gespeichert ist, kann die Schaltinformation bzw. der Code entschlüsselt werden, d.h. aus dem Verifikationssignal zurückgewonnen werden. Auf ähnliche Weise kann auch nur eine Signatur der Schaltinformation bzw. des Codes in die Verifikationsinformation eingefügt werden, deren Unversehrtheit und Echtheit bestätigen, dass die Schaltinformation bzw. der Code den Vorgaben entsprechen. Es muss in diesem Fall geprüft werden, ob die Signatur zu den Schaltinformationen bzw. dem Code gehört., d.h. die korrekte zugehörige Signatur ist.

Es werden ein Verfahren und ein Laminationskörper geschaffen, die mit einfachen Mitteln ermöglichen, dass ausschließlich autorisierte Verifikationen stattfinden. Beispielsweise kann die elektromagnetische Hochfrequenzstrahlung von einem gebräuchlichen Mobiltelefon erzeugt werden, welches eine aktive Nahfeldkommunikationseinrichtung, NFC-Einrichtung, umfasst, wobei NFC für "Near Field Communication" steht.

Die Antennenstruktur, die Schaltungsanordnung sowie der Aktuator sind vorzugsweise zwischen mindestens zwei der Substratschichten, d.h. im Innern des Laminationskörpers angeordnet. Die Antennenstruktur ist hierbei besonders bevorzugt mittels einer leitfähigen Tinte auf eine der selbsttragenden Substratschichten aufgedruckt, bevor diese mit den weiteren Substratschichten zu dem Laminationskörper zusammengefügt worden ist. Hierdurch sind die Antennenstruktur und der Aktuator, beispielsweise in Form eines Leuchtmittels, zuverlässig vor äußeren Einwirkungen und Manipulation geschützt. Auch die Schaltungsanordnung, die in der Regel in einem gehausten oder nicht gehausten Mikrochip realisiert ist, ist vorzugsweise in einem polymerbasierten Material angeordnet und ins Innere des Laminationskörpers einlaminiert und so vor Manipulationen von außen geschützt.

Es können unterschiedlichste Aktuatoren verwendet werden.

Bei einer Ausführungsform umfasst der Aktuator eine Lichtquelle, die in dem bestromten Zustand Licht emittiert und in dem nicht-bestromten Zustand kein Licht emittiert, so dass die erfassbare Eigenschaft in Form eines als Lichtsignal ausgebildeten Erfassungssignals erfassbar ist.

Es wird somit als erfassbare Eigenschaft Licht vorzugsweise in Form eines Lichtsignals als Erfassungssignal erfasst, welches vom Licht einer in den Laminationskörper integrierten Lichtquelle stammt.

Die Lichtquelle umfasst vorzugsweise mindestens ein Leuchtmittel in Form einer LED oder einer OLED. So ausgebildete Leuchtmittel sind von ihrer körperlichen Gestalt klein und dennoch in der Lage, mit geringen Strömen, die in die Antennenstruktur mittels der elektromagnetischen Hochfrequenzstrahlung induzierbar sind, eine hohe Lichtausbeute zu gewährleisten.

Die LED und/oder OLED können so ausgestaltet und ausgewählt werden, dass die Wellenlänge des im aktiven, bestromten Zustand emittierten Lichts in einem bestimmten Wellenlängenbereich liegt. Es kann sowohl Licht im sichtbaren Wellenlängenbereich als auch alternativ und/oder zusätzlich Licht im ultravioletten Wellenlängenbereich und/oder infraroten Wellenlängenbereich emittiert werden.

Wird von dem Leuchtmittel ausschließlich Licht im infraroten und/oder ultravioletten Wellenlängenbereich emittiert, so ist die Aktivierung des Leuchtmittels selbst durch einen menschlichen Betrachter nicht erfassbar. Durch einen menschlichen Betrachter ist bei diesen Ausführungsformen nur ein beleuchtetes Sicherheitsmerkmal erfassbar, welches eine Wellenlängenkonvertierung bewirkt, wie beispielsweise ein mittels Lumineszenzmitteln ausgebildetes Merkmal. Dem Fachmann ist eine Vielzahl von solchen Lumineszenzmitteln bekannt.

Andere Ausführungsformen können vorsehen, dass das von dem Leuchtmittel emittierte Licht zumindest teilweise oder vollständig im sichtbaren Wellenlängenbereich liegt.

Besonders bevorzugt ist die Lichtquelle eine Mehrfarblichtquelle, die im bestromten Zustand gesteuert unterschiedlich farbiges Licht emittieren kann. D.h., die Lichtquelle kann unterschiedliche Farbeindrücke bei einem normalsichtigen Menschen hervorrufen. Vorzugsweise umfasst eine solche Lichtquelle eine mehrfarbige LED, also eine Halbleiterstruktur, die unterschiedlich farbiges Licht gesteuert erzeugen kann.

Eine Weiterbildung des Laminationskörpers sieht vor, dass eine Materialschicht in dem Laminationskörper so angeordnet ist, dass diese im bestromten Zustand des als Lichtquelle ausgebildeten Aktuators hinterleuchtet oder seitlich beleuchtet wird, wobei die Materialschicht an unterschiedlichen Positionen unterschiedliche optische Eigenschaften aufweist, so dass die erfassbare Eigenschaft ein Muster, insbesondere eindimensionales oder zweidimensionales Lichtmuster, ist und mittels eines als ein Mustersignal ausgebildeten Erfassungssignals erfassbar ist. Das Mustersignal umfasst hierbei eine Vielzahl von Lichtsignalen für unterschiedliche Positionen des Musters.

Die Materialschicht kann beispielsweise aus für das Licht des Leuchtmittels transparentem Material ausgebildet und an einzelnen Positionen so verändert sein, dass an diesen Stellen das Licht des Leuchtmittels gestreut wird. Dies ist besonders für Ausführungsformen geeignet, bei denen das Licht seitlich in die Materialschicht also parallel zu einer Oberfläche der Materialschicht, welche parallel zur Oberfläche des Laminationskörpers ausgebildet ist, eingestrahlt wird. Bei anderen Ausführungsformen kann die Materialschicht aus für das Licht des Leuchtmittels opakem Material ausgebildet sein, welches an einigen Positionen für das Licht des Leuchtmittels transparent oder transluzent ist bzw. transparent oder transluzent ausgebildet werden kann. Dies ist besonders für Ausführungsformen vorteilhaft, bei denen die Materialschicht des Sicherheitsmerkmals hinterleuchtet wird, d.h. sich zwischen dem Leuchtmittel und einer Oberseite des Laminationskörpers befindet, über den das Sicherheitsmerkmal optisch erfasst, beispielsweise betrachtet wird.

Die Materialschicht muss keine der ursprünglichen selbsttragenden Schicht gewesen sein, die zu dem Laminationskörper zusammengefügt wurden. Sie kann jedoch eine selbsttragende Substratschicht gewesen sein. Alternativ kann die Materialschicht eine Druckschicht oder jede beliebige andere Schicht sein, die entsprechende Eigenschaften aufweist.

Bei einigen Ausführungsformen ist mit einem als Lichtquelle ausgebildeten Aktuator eine lumineszierende Materialschicht als innere Schicht gekoppelt, die mittels der Lichtquelle im bestromten Zustand des Aktuators zur flächigen Lumineszenz anregbar ist. Das Lumineszenzlicht kann dann zum Hinterleuchten von transparenten und/oder transluzenten Bereichen in dem Betrachter oder einer Erfassungseinheit zugewandten, d.h. darüberliegenden, Sichten verwendet werden.

Bei einer anderen Ausführungsform umfasst der Aktuator eine elektrisch schaltbare Schicht, so dass die erfassbare Eigenschaft beispielsweise ein Muster ist und als ein als Mustersignal ausgebildetes Erfassungssignal erfassbar ist.

Solche elektrisch schaltbaren Schichten sind schwierig nachzubilden. Die schaltbare Schicht kann beispielsweise eine elektrochrome Schicht oder eine Flüssigkristallschicht sein. Eine elektrochrome Schicht, kann beispielsweise eine Farbe und/oder Transmissionseigenschaft abhängig vom elektrischen Schaltungszustand ändern.

Sowohl in einer hinterleuchteten oder seitlich beleuchteten Materialschicht als auch in einer elektrisch schaltbaren Schicht können nachträglich lokale Modifikationen ausgebildet werden, die nur in einem bestromten Zustand des Aktuators oder in einem nicht bestromten Zustand des Aktuators erfassbar sind. Die Modifikationen bewirken lokal unterschiedliche optische Eigenschaften.

Bei besonders bevorzugten Ausführungsformen ist vorgesehen, dass die unterschiedlichen optischen Eigenschaften über Lasermodifikationen auf oder in der einen Materialschicht bzw. elektrisch schaltbaren Schicht ausgebildet sind. Dies bietet den Vorteil, dass die unterschiedlichen optischen Eigenschaften der Materialschicht und/oder der elektrisch schaltbaren Schicht abschließend als letzter Schritt der Fertigstellung eines beispielsweise als Sicherheitsdokument ausgebildeten Laminationskörpers herbeigeführt werden können.

Der Laminationskörper kann somit ein Sicherheitsdokumenten-Rohling sein, der über einen letzten Schritt, bei dem die Materialschicht oder der Aktuator in Form einer elektrisch schaltbaren Schicht lokal hinsichtlich ihrer optischen Eigenschaften verändert werden, in ein fertiges Sicherheitsdokument überführt wird. Bei anderen Ausführungsformen ist der Laminationskörper ein bereits fertig individualisiertes Sicherheitsdokument.

Die Materialschicht oder die elektrisch schaltbare Schicht sind bei einer bevorzugten Ausführungsform im Innern des Laminationskörpers ausgebildet. Hierdurch wird ein Schutz gegenüber Manipulationen gewährleistet. Bei der Materialschicht kann es sich auch um eine Druckschicht handeln, die lateral strukturiert ist und hierüber beispielsweise eine individualisierende Information speichert.

Bei einigen Ausführungsformen umfasst der Laminationskörper Lumineszenzmittel, die mittels des im bestromten Zustand des Aktuators emittierten Lichts zumindest teilweise anregbar sind, wobei eine Information während der Lumineszenz der Lumineszenzmittel erfassbar ist. Beispielsweise kann somit die Materialschicht mittels im sichtbaren Wellenlängenbereich nicht erfassbarer, transparenter Tinte bedruckt sein, welche Lumineszenzmitteln umfasst, die bei einer seitlichen Beleuchtung oder Hinterleuchtung der Materialschicht luminesziert.

Die Lumineszenzmittel können jedoch auch zusätzlich zu einer Materialschicht, welche an unterschiedlichen Positionen unterschiedliche optische Eigenschaft aufweist, in dem Sicherheitsmerkmal vorgesehen sein. So kann beispielsweise die Materialschicht in einem Teilbereich mit einem für den sichtbaren Wellenlängenbereich transparenten UV- oder IR-Absorber ausgebildet sein. Auf einer von dem Leuchtmittel abgewandten Seite der Materialschicht ist eine Information mittels im sichtbaren Bereich transparenten Lumineszenzmitteln ausgebildet, wobei die durch die Lumineszenzmittel ausgebildete Gesamtinformation teilweise über den UV absorbierenden Bereichen der Materialschicht und zum Teil über den Aussparungen bzw. transparenten Bereichen der Materialschicht ausgebildet sind. Wird der als Leuchtmittel ausgebildete Aktuator von dem passiven, nicht bestromten Zustand in den aktiven, bestromten Zustand versetzt, so werden die Teile der mittels der Lumineszenzmittel ausgebildeten Information über die emittierte Lumineszenzstrahlung erfassbar, die sich nicht über den UV- bzw. IR-absorbierenden Bereichen befindet. Die restlichen mittels der Lumineszenzmittel gedruckten Bestandteile der Gesamtinformation sind hingegen weder im aktiven Zustand noch im passiven Zustand des Leuchtmittels erkennbar. Wird hingegen über die Betrachtungsseite des Laminationskörpers Licht jener Wellenlänge eingestrahlt, welche die Lumineszenz der Lumineszenzmittel anregen kann, wird die Gesamtinformation der mittels der Lumineszenzmittel ausgebildeten Information erfassbar.

Selbst wenn eine Drucktinte, mit der Lumineszenzmittel verdruckt ist, im sichtbaren Wellenlängenbereich nicht transparent ist, ist die individualisierende Information hier dennoch verdeckt gespeichert, da im passiven Zustand nicht ermittelt werden kann, welcher Bestandteil der Gesamtinformation die individualisierende Information darstellt, die im aktivierten, bestromten Zustand des Leuchtmittels lumineszieren wird.

Ein sehr zuverlässig zu verifizierendes Merkmal erhält man bei Ausführungsformen, bei denen mit der Lichtquelle Lichtleitkanäle, die auch als Lichtleiter bezeichnet werden, gekoppelt sind, die Licht zu einer Seitenfläche und/oder Kante des Laminationskörpers führen, so dass ein, vorzugsweise den Laminationskörper gegenüber gleichartigen Laminationskörpern individualisierendes, Lichtmuster an der Seitenfläche und/oder der Kante im aktiven, bestromten Zustand des Leuchtmittels erfassbar ist. Lichtleit-Kanäle können auf einfache Weise mit transparentem Material beispielsweise auf transparente und/oder opake Substratschichten vor dem Laminieren aufgedruckt werden. Sie können beispielsweise sowohl zur Oberseite als auch zur Unterseite des Laminationskörpers durch eine jeweils für das Licht des Leuchtmittels opake Schicht verdeckt sein. Besonders bevorzugt sind das Leuchtmittel und die Eintrittsbereiche der Lichtleitkanäle durch für das Licht des Leuchtmittels opakes Material im Innern des Laminationskörpers umschlossen, um einen direkten Lichtaustritt des Lichts des Leuchtmittels des Aktuators aus dem Laminationskörper zu vermeiden.

Alternativ oder zusätzlich können die Lichtleitkanäle mit Streuzentren, beispielsweise in Form von Lumineszenzmitteln ausgebildet sein. In diesem Fall ist auch der Verlauf der beispielsweise auf eine Substratschicht aufgedruckten Lichtleitkanäle im aktiven Zustand des Leuchtmittels über die austretende Lumineszenzstrahlung erfassbar. Die eine individualisierende Information kann in diesem Falle durch die laterale Strukturierung des oder der Lichtleitkanäle erfolgen, die beispielsweise die Formen von alphanumerischen Zeichen nachbilden können. Hierbei sind die Leichtleitkanäle nicht durch eine opake Schicht gegenüber der Oberseite des Laminationskörpers verdeckt.

Bei einer solchen Ausführungsform muss das Licht nicht zu einer Seitenkante und/oder Oberfläche geführt sein. Die Lichtleitkanäle müssen in diesem Fall kein Austrittsende an der Oberseite und/oder einer Kante des Laminationskörpers aufweisen.

Wieder andere Ausführungsformen sehen vor, dass der Aktuator ein Piezoelement umfasst und die Schaltungsanordnung ausgebildet ist, das Piezoelement im bestromten Zustand zu akustisch und/oder haptisch wahrnehmbaren Schwingungen anzuregen, so dass die erfassbare Eigenschaft eine akustisch oder haptisch wahrnehmbare Schwingung ist und ein als ein akustisches und/oder haptisches Schwingungssignal ausgebildetes Erfassungssignal erfassbar ist. Hierdurch können nicht optische Eigenschaften des Laminationskörpers zur Verifikation genutzt werden. Solche Eigenschaften lassen sich sehr schwer nachahmen und bieten daher einen hohen Schutz gegen Fälschungen.

Eine vorteilhafte Ausführungsform sieht vor, dass als die mindestens eine Eigenschaft ein Erfassungssignal in Form eines abgestrahltes akustischen und/oder haptischen Signals und/oder in Form eines Lichtsignals und/oder in Form eines eindimensionalen oder zweidimensionalen oder dreidimensionalen Mustersignals erfassbar ist. Hierbei wird eine Zusammenfassung oder eine Gesamtheit von zu unterschiedlichen Zeitpunkten erfassten Eigenschaften als ein Erfassungssignal bezeichnet. Ein Erfassungssignal bietet den Vorteil, dass ein zeitlicher Verlauf der Eigenschaft betrachtet werden kann.

Bei einer einfachen Form eines Erfassungssignals sind die Messergebnisse der mindestens einen Eigenschaft im unbestromten Zustand und im bestromten Zustand zusammengefasst.

Nachfolgend wird die Erfindung unter Bezugnahme auf eine Zeichnung näher erläutert. Hierbei zeigen:
- Fig. 1: eine schematische Teilexplosionsansicht eines als Sicherheitsdokument ausgebildeten Laminationskörpers;
- Fig. 2: eine schematische Teilexplosionsansicht eines weiteren als Sicherheitsdokument ausgebildeten Laminationskörpers;
- Fig. 3: eine schematische Teilexplosionsansicht noch eines weiteren als Sicherheitsdokument ausgebildeten Laminationskörpers.;
- Fig. 4a: eine schematische Teilexplosionsansicht eines Sicherheitsdokuments, bei dem in einem Bereich eines als elektrisch schaltbare Schicht ausgebildeten Aktuators im nicht bestromten Zustand ein Durchsichtfenster ausbildet ist;
- Fig. 4b: eine schematische Teilexplosionsansicht des Sicherheitsdokuments nach Fig. 4a, bei dem im bestromten Zustand der Bereich des Durchsichtfensters bis auf modifizierte Unterbereiche opak wird; und
- Fig. 5: eine schematische Teilexplosionsansicht eines Sicherheitsdokuments mit einem als Schwingquarz ausgebildeten Aktuator.

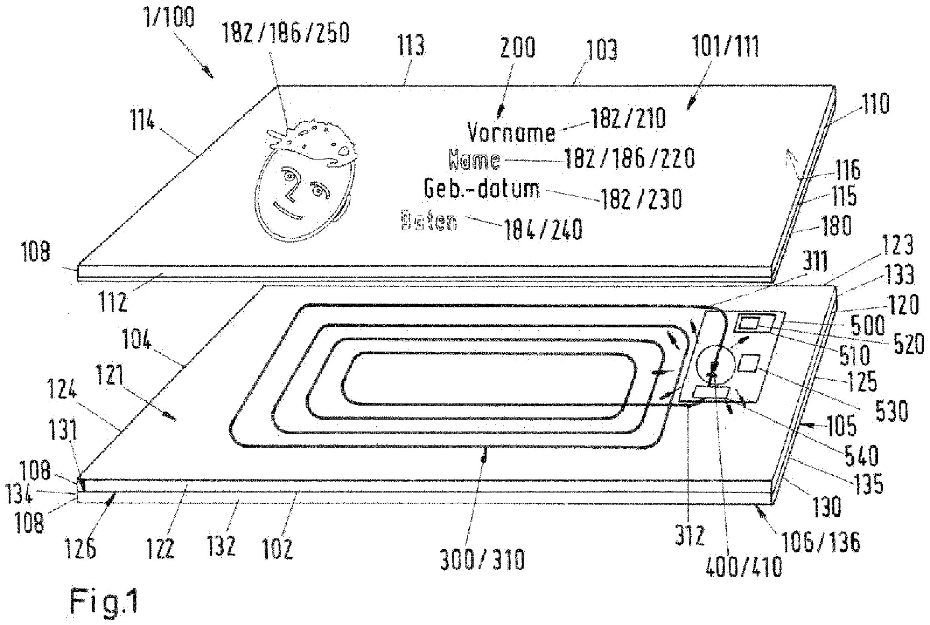

In Fig. 1 ist schematisch als Teilexplosionszeichnung eines als Sicherheitsdokument 1 ausgebildeten Laminationskörpers 100 gezeigt. Dieser weist eine Oberseite 101, eine gegenüberliegende Unterseite 106 sowie eine vordere Seitenkante 102 eine hintere Seitenkante 103, ein linke Seitenkante 104 und eine rechte Seitenkante 105 auf.

Der Laminationskörper 100 ist aus mehreren Substratschichten 108 gebildet, die flächig miteinander verbunden sind.

In der dargestellten Ausführungsform ist der Laminationskörper 100 aus drei Substratschichten 108, einer oberen Substratschicht 110, einer mittleren Substratschicht 120 und einer unteren Substratschicht 130 gebildet. Diese weisen jeweils eine Oberseite 111, 121, 131, eine Unterseite 116, 126,136, sowie Seitenkanten 112-115, 122-125, 132-135 auf.

Die Anzahl der Substratschichten ist hier nur beispielhaft. Laminationskörper 100 können aus mehr Substratschichten 108 oder weniger Substratschichten gebildet sein, die miteinander zu dem Laminationskörper 100 zusammengefügt sind.

Zwischen zwei der Substratschichten 108, hier zwischen der mittleren Substratschicht 120 und der oberen Substratschicht 110, ist eine Antennenstruktur 300 ausgebildet. Diese ist vorzugsweise als Antennenspule 310 mit einer Windung oder bevorzugter mehreren Windungen, wie im dargestellten Ausführungsbeispiel, ausgebildet. Die Darstellung ist nur schematisch.

Die Antennenstruktur 300 kann aus einem metallischen Draht gebildet sein. Bevorzugt wird die Antennenstruktur jedoch mit einer leitfähigen Tinte oder Zubereitung auf eine Ober- oder Unterseite einer der Substratschichten 108 aufgedruckt, wobei diese Seite im fertigen Laminationskörper 100 innenliegend ist, das heißt, einer der anderen Substratschichten 108 zugewandt ist.

Im dargestellten Ausführungsbeispiel ist die Antennenstruktur 300 auf die Oberseite 121 der mittleren Substratschicht 120 aufgedruckt. Die Antennenstruktur 300 ist hier als Antennenspule 310 mit drei Windungen ausgebildet. Zwischen Anschlusskontakten 311 und 312 der Antennenspule 310 ist gemeinsam mit einer Schaltungsanordnung 500 ein Aktuator 400 angeordnet. In der in Fig. 1 dargestellten Ausführungsform ist der Aktuator beispielsweise als Lichtquelle mit einem Leuchtmittel 410 ausgebildet.

Die Antennenspule 310 ist mit der Schaltungsanordnung 500 und dem Aktuator 400 so abgestimmt, dass aus einem elektromagnetischen Hochfrequenzfeld oder einer elektromagnetischen Hochfrequenzstrahlung einer vorgegebenen Frequenz nach Möglichkeit eine resonante Einkopplung von Energie in Form eines induzierten Stroms erfolgt, wenn die elektromagnetische Hochfrequenzstrahlung oder das elektromagnetische Hochfrequenzfeld die Antennenstruktur 300 durchdringen.

Eine solche elektromagnetische Hochfrequenzstrahlung bzw. ein solches elektromagnetisches Hochfrequenzfeld wird beispielsweise mittels einer Nahfeldkommunikationseinrichtung erzeugt. Moderne Mobiltelefone, die auch als Smartphones bezeichnet werden, umfassen häufig aktive Nahfeldkommunikationseinrichtungen, die eine elektromagnetische Hochfrequenzstrahlung erzeugen. Es kann jedoch auch eine andere Kommunikationseinrichtung verwendet werden, die eine elektromagnetische Hochfrequenzstrahlung oder ein elektromagnetisches Hochfrequenzfeld erzeugt und über hierauf modulierte Signale mit der Schaltungsanordnung 500 eine Kommunikation ausführen kann.

Die Schaltungsanordnung 500 ist in jedem Fall so ausgebildet, dass eine Kommunikationseinrichtung 510 eine Demodulation eines auf das Hochfrequenzfeld oder die Hochfrequenzstrahlung aufmodulierten Signals als Verifikationssignal vorgenommen wird. Hierfür kann die Kommunikationseinrichtung 510 eine Demodulationseinrichtung 520 umfassen.

Dieses Verifikationssignal wird in einer Vergleichereinrichtung 530 mit Vorgaben verglichen. Nur wenn das Verifikationssignal den Vorgaben entspricht, wird der Aktuator 400 bestromt und in einen bestromten Zustand versetzt. Der bestromte Zustand wird auch als aktiver Zustand bezeichnet. Hierfür weist die Schaltungsanordnung 500 vorzugsweise eine Schalt- und Steuereinrichtung 540 auf. Die Einrichtungen 510 - 540 der Schaltungsanordnung 500 sind vorzugsweise in einer Halbleiterschaltung, besonders bevorzugt in einem Mikrochip ausgebildet.

Die Schaltungsanordnung 500 kann zusätzlich verschiedene weitere Elemente enthalten (nicht dargestellt), beispielsweise einen Gleichrichter, Elemente zum Glätten des induzierten Stroms, Elemente zum kurzzeitigen (maximal einige Sekunden) Speichern von elektrischer Energie, z.B. in Form eines Kondensators.

Die Kommunikationseinrichtung 510 der Schaltungsanordnung 500 umfasst vorzugsweise Elemente, die eine Kommunikation gemäß einem Kommunikationsstandard, beispielsweise einem Nahfeldkommunikationsstandard oder RFID-Standard ausführen können. Ferner ist die Schaltungsanordnung 500 ausgebildet, den Aktuator 400, beispielsweise das Leuchtmittel 410, zu schalten und gegebenenfalls den Aktuator 400 variabel anzusteuern, beispielsweise bei einem als Leuchtmittel 410 ausgebildeten Aktuator 400 die Lichtemission hinsichtlich der Intensität des emittierten Lichts und/oder der Lichtwellenlänge (Farbe) im zeitlichen Verlauf zu modulieren.

Wird der Aktuator 400 bestromt, so ändert sich eine von außerhalb des Laminationskörpers 100 erfassbare physikalische Eigenschaft. Ist der Aktuator 400 als das Leuchtmittel 410 ausgebildet und wird dieser bestromt, so emittiert das Leuchtmittel 410 Licht. Das emittierte Licht kann hierbei im sichtbaren Wellenlängenbereich und/oder im UV-Wellenlängenbereich und/oder im IR-Wellenlängenbereich liegen.

Andere Aktuatoren 500 können andere optisch erfassbare Eigenschaften wie eine Transmission, Remission, Polarisation von Licht oder ähnliches verändern oder auch eine haptische, akustische oder elektrische Eigenschaft verändern.

Bei der Ausführungsform nach Fig. 1 ist der als Leuchtmittel 410 ausgebildete Aktuator 400 im bestromten Zustand aktiv und emittiert Licht. Im nicht bestromten Zustand ist das Leuchtmittel 410 inaktiv oder passiv und emittiert kein Licht.

Das Leuchtmittel 410 ist bevorzugt eine Leuchtdiode (LED) oder eine organische Leuchtdiode (OLED). Diese weisen eine hohe Lichtausbeute bei geringem Strombedarf auf. Die Emissionswellenlänge kann über die Auswahl oder den Aufbau der Leuchtdiode/organischen Leuchtdiode bei der Herstellung gesteuert werden.

Mit dem Leuchtmittel 410 ist in der Ausführungsform der Fig. 1 ein Sicherheitsmerkmal gekoppelt, welches einen Erfassungszustand oder erfassbaren Zustand und einen verdeckten Zustand aufweist. Der Wechsel zwischen dem Erfassungszustand und dem verdeckten Zustand wird über einen Wechsel des Zustands des Leuchtmittels bzw. des Aktuators herbeigeführt.

Bei einer Ausgestaltung ist die obere Substratschicht 110 transparent. Diese Substratschicht 110 ist vor dem Laminieren an ihrer Unterseite 116 vollflächig so bedruckt, dass eine hierbei gebildete Druckschicht 180 opak ist. Dies bedeutet, dass ein menschlicher Betrachter, der den Laminationskörper 100 über die Oberseite 101 betrachtet, während die Oberseite 101 des Laminationskörpers 100 mit Licht im sichtbaren Wellenlängenbereich beleuchtet wird, die darunter angeordnete Antennenstruktur 300 und das Leuchtmittel 410 nicht sehen kann.

Die Druckschicht 180 kann ein oder mehrlagig ausgebildet sein.

Einzelne Bestandteile 182 der Druckschicht 180 weisen jeweils gegenüber ihrer Umgebung, die auch als lokaler Hintergrund bezeichnet werden kann, einen Farbkontrast auf, so dass diese Bestandteile 182 vor der Umgebung/dem lokalen Hintergrund bei einer Beleuchtung der Oberseite 101 des Laminationskörpers 100 mit sichtbarem Licht für einen menschlichen Betrachter oder eine fotografische Erfassungseinrichtung hinsichtlich ihrer Form und Gestalt abgegrenzt von ihrer Umgebung erfassbar sind. Diese Bestandteile 182 weisen beispielsweise die Form von alphanumerischen Zeichen, Piktogrammen oder die Farbtöne eines Fotos oder Portraitbildes auf. Hierüber ist eine den Laminationskörper 100 gegenüber gleichartigen Laminationskörpern individualisierende Information 200 ausgebildet. Vorzugsweise ist diese Information einer Person zugeordnet, welcher wiederum der Laminationskörper 100 zugeordnet ist. Solche Informationen werden dann als personalisierende Informationen bezeichnet. Die Bestandteile 182 umfassen einen Vornamen 210, einen Namen 220, ein Geburtsdatum 230 und ein Portraitbild 250.

In der Druckschicht 180 ist ein weiterer Bestandteil 184 der individualisierenden Informationen 200 so ausgebildet, dass dieser bei Beleuchtung mit sichtbarem Licht keinen Kontrast gegenüber der Umgebung aufweist, jedoch mit Photo-Lumineszenzmittel ausgebildet ist. Im Folgenden werden diese verkürzend immer nur als "Lumineszenzmittel" bezeichnet. Der weitere Bestandteil 184 umfasst hier beispielsweise einen Geburtsort, eine Anschrift usw. was hier mittels des Begriffs Daten 240 exemplarische angegeben ist. Die Lumineszenzmittel sind mittels Lichts im nicht sichtbaren Wellenlängenbereich zu einer Lumineszenz anregbar. Erfasst man den Laminationskörper 100 von der Oberseite 101, während die Lumineszenz über Einstrahlung von UV-Licht und/oder IR-Licht angeregt ist, so sind Form und Gestalt dieses weiteren Bestandteils 184 der Druckschicht 180 gegenüber der Umgebung erfassbar. Die in der Form und/oder Gestalt gespeicherte Information, die beispielsweise als farbig oder bunt leuchtende alphanumerische Zeichen erfassbar ist, sind somit nur erfassbar, wenn eine Lumineszenzanregung stattfindet, ansonsten ist die in diesem weiteren Bestandteil 184 gespeicherte Information verdeckt.

Das Leuchtmittel 410 der Ausführungsform der Fig. 1 ist somit so ausgebildet, dass es Licht im nicht sichtbaren Wellenlängenbereich emittiert, für welches die opake Farbe zumindest soweit durchlässig ist, dass dieses Licht die Lumineszenzmittel in der Druckschicht 180 anregen kann, sodass der oder die weiteren Bestandteile 184 und die darin gespeicherte Information im aktiven Zustand des Leuchtmittels 410 optisch erfassbar sind.

Im dargestellten Ausführungsbeispiel sind somit die individualisierenden "Daten" 240 im passiven Zustand des Leuchtmittels 410 verdeckt.

Bei einer Variante der dargestellten Ausführungsform sind alternativ oder zusätzlich zu den weiteren Bestandteilen 184 der individualisierenden Informationen 200 einzelne Unterbestandteile 186 der einen Kontrast gegen über der Umgebung aufweisenden Bestandteile 182 auch mit Lumineszenzmitteln ausgebildet. Hierbei sind nur einige Unterbestandteile 186 der gesamten über den Kontrast im sichtbaren Licht erfassbaren Information mit Lumineszenzmitteln ausgebildet. Verschiedene gleichartige Laminationskörper unterscheiden sich nicht nur bezüglich der Form der Unterbestandteile 186 (z.B. der konkreten Buchstaben) sondern auch hinsichtlich der Anordnung der Unterbestandteile 186 und/oder deren Ausgestaltung, z.B. bezüglich der Farbe des emittierten Lumineszenzlichts.

Wird nun der Laminationskörper 100 und insbesondere die Antennenstruktur 300 von elektromagnetischer Hochfrequenzstrahlung durchstrahlt, so demoduliert die Schaltungsanordnung 500 ein Verifikationssignal, in dem eine Verifikationsinformation kodiert ist, und prüft, ob diese Verifikationsinformation oder das Verifikationssignal Vorgaben entspricht, beispielsweise einen gültigen Schaltungscode enthält, über den die Schaltungsanordnung 500 geschaltet werden kann, um einen Aktuator zu bestromen. Wird der als das Leuchtmittel 410 ausgebildete Aktuator in dem Laminationskörper 100 bestromt, so wird der Aktuator hierüber zur Emission von Licht, beispielsweise im nichtsichtbaren Wellenlängenbereich veranlasst. Die Wellenlänge des Lichts ist so gewählt, dass die Lumineszenzmittel in der Druckschicht 180 lumineszieren. So lumineszieren der weitere Bestandteil 184 der Druckschicht 180 und gegebenenfalls die mit den Lumineszenzmitteln ausgebildeten Unterbestandteile 186. Die Anordnung und Ausgestaltung, beispielsweise der Lumineszenzfarben, d.h. der emittierten Wellenlängen, der Unterbestandteile 186 speichert eine weitere individualisierende Information zusätzlich zu der aufgrund des Kontrasts im sichtbaren Wellenlängenbereichs ohnehin grafisch erfassbaren Information. In der dargestellten Ausführungsform ist eine individualisierende Information dadurch gespeichert, dass der Name 220 und das Portraitbild 250 zusätzlich auch lumineszieren, wohingegen der Vorname 210 und das Geburtsdatum 230 auch im aktiven Zustand des Leuchtmittels 410 nicht lumineszieren.

Bei einer anderen Ausführungsform ähnlich zu der nach Fig. 1 sind alle Bestandteile einer individualisierenden Information, die aufgrund des Kontrasts der Bestandteile zur lokalen Umgebung im sichtbaren Licht erfassbar sind, zusätzlich mit Lumineszenzmitteln ausgebildet, die mit Licht im nicht sichtbaren Wellenlängenbereich zur Lumineszenz anregbar sind. Bei einer Anregung mit nicht sichtbarem UV- und/oder IR-Licht luminesziert somit die gesamte Information. Im Falle der IR-Anregung wird beispielsweise ein Up-Converter-Lumineszenzmittel verwendet, das Licht kürzerer Wellenlänge emittiert, als es zur Anregung absorbiert. Zusätzlich sind jedoch einige der Bestandteile der Information an der von der Oberseite 101 des Laminationskörpers abgewandten Seite mit einem UV- und/oder IR-Absorber versehen, z.B. überdruckt, so dass einzelne Bestandteile der Information von dem Licht des Leuchtmittels nicht zur Lumineszenz angeregt werden können. Die im passiven Zustand des Leuchtmittels verdeckte Information ist im aktiven Zustand des Leuchtmittels in der selektiven Lumineszenz einzelner Bestandteile, d.h. deren Anordnung und Ausgestaltung neben deren Form, d.h. unabhängig von der Form, gespeichert und erfassbar.

Besonders bevorzugte Ausführungsformen eines Laminationskörpers weisen somit eine den Laminationskörper gegenüber anderen Laminationskörpern einer Vielzahl von Laminationskörpern individualisierende Information auf, die bei einer Betrachtung mit sichtbarem Licht, nicht erfassbar ist, jedoch bei einer Anregung mit nicht sichtbarem Licht des als Leuchtmittel ausgebildeten Aktuators im sichtbaren Wellenlängenspektrum erfassbar ist.

Gemeinsam ist den zuvor beschriebenen Ausführungsformen, dass diese eine Materialschicht in Form der Druckschicht aufweisen, die an unterschiedlichen Positionen unterschiedliche optische Eigenschaften aufweist, die im Zusammenwirken mit dem Licht des Leuchtmittels das Sicherheitsmerkmal ausbilden, welches einen Erfassungszustand und einen verdeckten Zustand aufweist.

Bei einfachen Ausführungsformen, bei denen der Aktuator als Leuchtmittel ausgebildet ist, kann auch das Erfassen des Lichts als erfassbarer Effekt oder Erfassungssignal ausgewertet werden.

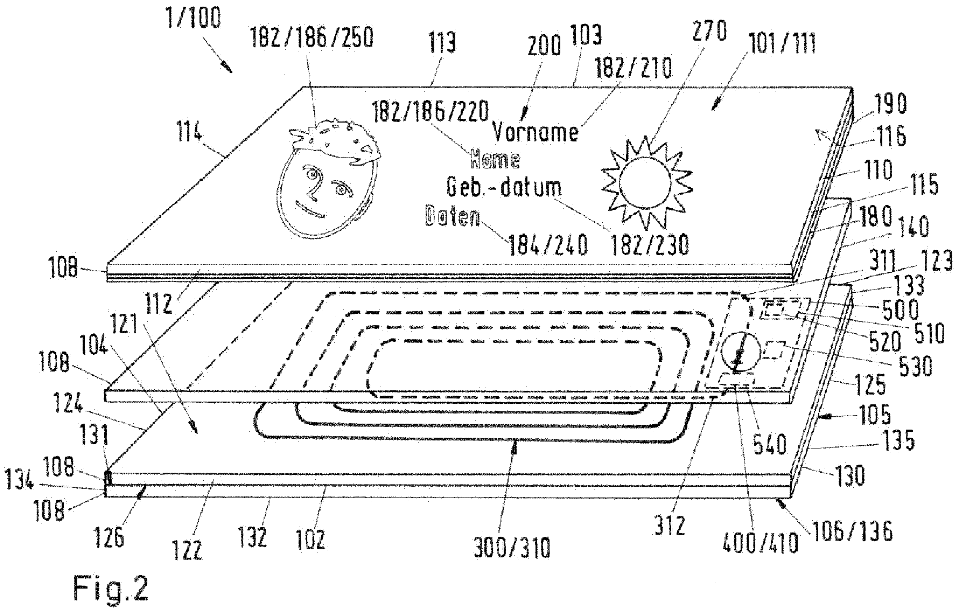

In Fig. 2 ist ein weiterer als Sicherheitsdokument 1 ausgestalteter Laminationskörper 100 gezeigt. Gleiche technische Merkmale sind in allen Figuren mit denselben Bezugszeichen gekennzeichnet.

Bei dieser Ausführungsform ist zwischen der mittleren Substratschicht 120 und der oberen Substratschicht 110 eine lumineszierende Substratschicht 140 angeordnet. Diese lumineszierende Substratschicht 140 wird im aktiven, bestromten Zustand des als Lichtquelle mit einem Leuchtmittel 410 ausgebildeten Aktuators 400 flächig zum Lumineszieren angeregt.

Die obere Substratschicht 110 ist an ihrer Unterseite 116 erneut mit einer Druckschicht 180 versehen, die individualisierende Bestandteile 182 umfasst, die aufgrund eines Kontrasts gegenüber der Umgebung im sichtbaren Licht erfassbar sind.

Die Druckfarben weisen jedoch, obwohl sie bei einer Beleuchtung des Laminationskörpers 100 von der Oberseite 101 die Antennenstruktur 300 und das Leuchtmittel 410 verbergen, eine gewisse Transmission für das Lumineszenzlicht der lumineszierenden Substratschicht 140 auf.

Zusätzlich ist auf die von der oberen Substratschicht abgewandte Seite der Druckschicht 180 eine für das Lumineszenzlicht opake Blockierschicht 190 aufgebracht. Diese wird lokal strukturiert, indem diese mit Durchbrechungen versehen wird. Die Durchbrechungen sind unter der transluzenten Druckschicht bei einer Betrachtung über die Oberseite 101 im sichtbaren Licht nicht erfassbar. Wird jedoch das Leuchtmittel 410 aufgrund des mittels der Hochfrequenzstrahlung induzierten Stroms von der Schaltungsanordnung 500, nachdem diese das mit der Hochfrequenzstrahlung übertragene Verifikationssignal mit Vorgaben verglichen hat und als den Vorgaben entsprechend festgestellt hat, in den aktiven bzw. bestromten Zustand versetzt, so wird in der lumineszierenden Schicht 140 eine Lumineszenz verursacht. An den Durchbrechungen tritt das Licht durch die ansonsten opake Blockierschicht 190, die beispielsweise eine dünne aufgedampfte Metallschicht ist. Das Muster und/oder die Gestalt der Durchbrechungen ist erfassbar und stellt die individualisierende Information im Erfassungszustand dar. Ein Teil der Durchbrechungen ist beispielsweise im Register mit der aufgedruckten Information ausgebildet, sodass diese Unterbestandteile 186 "leuchten", wenn der Aktuator 400 bestromt ist.

Die Metallschicht kann auch durch die transluzente Druckschicht mit einem Laser so modifiziert werden, dass die Durchbrechungen entstehen. Der Laminationskörper kann somit ein Rohling sein, der nachträglich individualisierbar ist.

Bei einer alternativen Ausgestaltung ist die Druckschicht 180 opak für das Licht der lumineszierenden Substratschicht. In die opake, nicht transluzente Druckschicht 180 können mikroskopische Löcher eingebracht werden bzw. sind eingebracht. Diese bilden gemeinsam eine individualisierende Information aus. Diese Mikrolöcher mit Durchmessern von vorzugsweise 1 bis 50 µm, bevorzugter 20 µm, sind bei einer Betrachtung im Auflicht nicht oder nahezu nicht erkennbar, insbesondere, wenn die Druckschicht mit dunklen Farben ausgeführt ist und unter der lumineszierenden Substratschicht 140 eine dunkle opake mittlere Substratschicht 130 angeordnet ist oder die lumineszierende Schicht 140 selbst Dunkel eingefärbt ist.

Im aktiven, bestromten Zustand des als Leuchtmittels 410 ausgebildeten Aktuators 500 sind die Mikrolöcher und damit gebildete Muster, zum Beispiel in Form von aus Punkten aufgebauter alphanumerische Zeichen, die helle Punkte bilden, gut erkennbar. Bei der dargestellten Ausführungsform sind der Name 220, die Daten 240 und das Portraitbild 250 aufgrund von mit Mikrolöchern ausgebildeten Punktmustern nur im aktiven Zustand des Leuchtmittels 410 erfassbar.

Zusätzlich ist in der Blockierschicht 190 ein weiteres Musterelement 270, beispielsweise in Form einer stilisierten Sonne, ausgebildet, welches im aktiven Zustand des Leuchtmittels erfassbar ist. Durch die transluzente vollflächige Druckschicht 180 werden die Durchbrechung oder Aussparung in der Blockierschicht 190, die das weitere Musterelement bilden, im passiven Zustand des Leuchtmittels 410 verdeckt.

Grundsätzlich können auch in der Druckschicht transparente Bereiche, beispielsweise in Form von Aussparungen vorgesehen sein, die im aktiven Zustand des Leuchtmittels aufgrund der Lumineszenz in der lumineszierenden Schicht leuchten, sofern die Blockierschicht ganz oder an den entsprechenden Stellen fehlt.

Bevorzugt werden Ausführungsformen, bei denen eine opake Schicht erst nach dem Fertigstellen des Laminationskörpers 100 bis auf eine Individualisierung, somit nach dem Herstellen als Sicherheitsdokumentrohling, abschließend lokal verändert wird. Die Änderungen werden vorzugsweise so ausgeführt, dass die Änderungen bei einer Betrachtung über die Oberseite 101 und Beleuchtung der Oberseite 101 mit sichtbarem Licht, was als Betrachtung im Auflicht bezeichnet wird, nicht sichtbar sind.

Bei einer anderen Ausführungsform kann statt der lumineszierenden Substratschicht auch eine streuende Substratschicht vorgesehen sein, die das Licht des Leuchtmittels ohne Wellenlängenänderung streut.

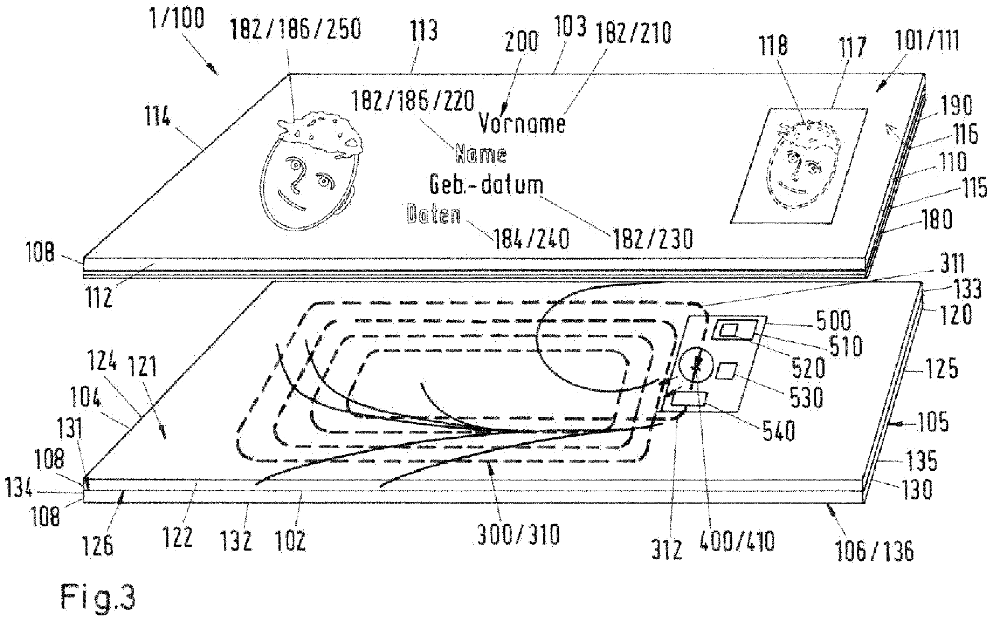

In Figur 3 ist schematisch eine weitere Ausführungsform eines als Sicherheitsdokument ausgebildeten Laminationskörpers 100 als Teilexplosionszeichnung dargestellt.

Erneut ist eine Unterseite 116 der oberen Substratschicht 110 mit einer Druckschicht 180 versehen. Hierbei können einzelne Unterbestandteile 186 der Druckschicht individualisierende Informationen, wie einen Name 220, Daten 240, und ein Portraitbild 250, darstellen und beispielsweise mit Tinten gedruckt sein, die mit Licht von dem Leuchtmittel 410 anregbare Lumineszenzmittel enthalten. Die Tinte mit denen der Vorname 210 und das Geburtsdatum 230 gedruckt sind, enthalten keine Lumineszenzmittel. Bei dieser Ausführungsform ist ein Fensterbereich 117 ausgebildet, in dem die obere Substratschicht 110 bis auf laserinduzierte Veränderungen 118, die bei einer Betrachtung durch die Oberseite 101 bei einer Beleuchtung der Oberseite 101 mit sichtbarem Licht nicht oder nahezu nicht erkennbar sind, transparent ist.

Die Lichtquelle 410 ist mit dem Fensterabschnitt 117 so lichtleitungstechnisch gekoppelt, dass Licht des Leuchtmittels 410 seitlich in den Fensterabschnitt 117 eingekoppelt wird. Dieses kann beispielsweise über einen oder mehrere mit dem Leuchtmittel 410 gekoppelte Lichtleitkanäle 415 erfolgen. Eine direkte Lichteinstrahlung in den Fensterabschnitt wird beispielsweise mittels der Druckschicht 180 und/oder der Blockierschicht 190 verhindert. Die Lichtleitkanäle 415, die auch als Lichtleiter bezeichnet werden. können beispielsweise aufgedruckt werden, indem transparente Tinten mit unterschiedlichen Brechungsindizes verwendet werden. Eine innere Schicht weist einen höheren Brechungsindex als die äußeren Schichten des gedruckten Lichtleitkanals 415 oder Lichtleitkanals auf. Die innere Schicht ist vollständig von der oder den äußeren Schichten umgeben.

Alternativ kann das Leuchtmittel 410 teilweise in die obere Substratschicht 110 seitlich neben dem Fensterabschnitt 117 eingesenkt sein. Zur Oberseite 101 ist das Leuchtmittel 410 auch dann vorzugsweise opak abgedeckt.

Die laserinduzierten Veränderungen 118 bewirken eine Streuung des seitlich in den Fensterabschnitt 117 eingekoppelten Lichts, so dass dieses an Positionen, an denen die Veränderungen des Materials der oberen Substratschicht 110 ausgebildet sind, Licht durch die Oberfläche 101 des Laminationskörpers austritt. Die Veränderungen sind so als leuchtende Positionen in dem Fensterabschnitt 117 erfassbar. Über deren Anordnung und Gestalt kann so eine individualisierende Information gespeichert werden, die im Erfassungszustand, während Licht des Leuchtmittels 410 in den Fensterabschnitt 117 seitlich eingekoppelt wird, erfassbar ist. Ist das Leuchtmittel im passiven Zustand, d.h. wird das Leuchtmittel 410 nicht bestromt und emittiert kein Licht, so sind die Veränderungen in dem transparenten Fensterabschnitt 117 nicht oder nahezu nicht erfassbar.

Die Lichtleitkanäle 415 können Licht des Leuchtmittels 410 alternativ oder zusätzlich auch zu einzelnen Bereichen der Druckschicht führen und dort Lumineszenzmittel anregen oder Durchbrechungen und/oder Mikroperforationen in diesen Bereichen hinterleuchten. Ebenso können die Lichtleiter 415 alternativ oder zusätzlich ausgebildet sein, Licht gezielt an Positionen entlang einer der Seitenkanten 102-105 im aktiven Zustand zu leiten, so dass ein Lichtmuster an der oder den entsprechenden Kanten 102-105 entsteht. Dieses Lichtmuster kann individualisierend für einen bestimmten Laminationskörper 100 einer Vielzahl von Laminationskörpern sein. Im passiven Zustand des Leuchtmittels 410 kann das Merkmal nicht oder nur sehr schwer erfasst werden.

Die Wellenlänge des Lichts der Lichtquelle liegt hierbei bevorzugt im sichtbaren Wellenlängenbereich. Sie kann aber auch im UV- oder IR-Wellenlängenbereich liegen. Verwendete Lumineszenzstoffe sind hinsichtlich dieser Anregungswellenlänge entsprechend angepasst ausgewählt. Die Lumineszenz liegt bevorzugt im sichtbaren Wellenlängenbereich.

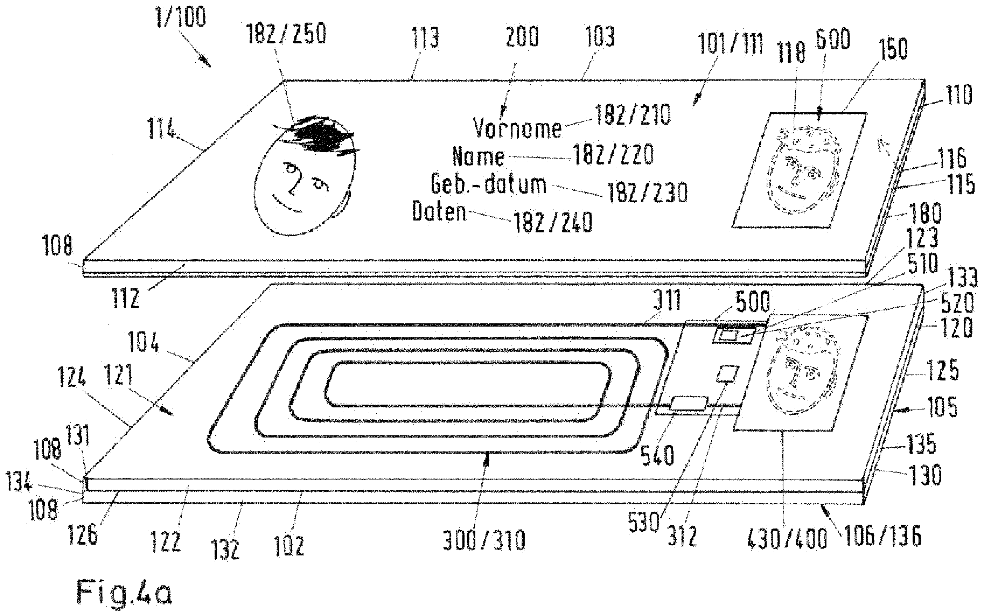

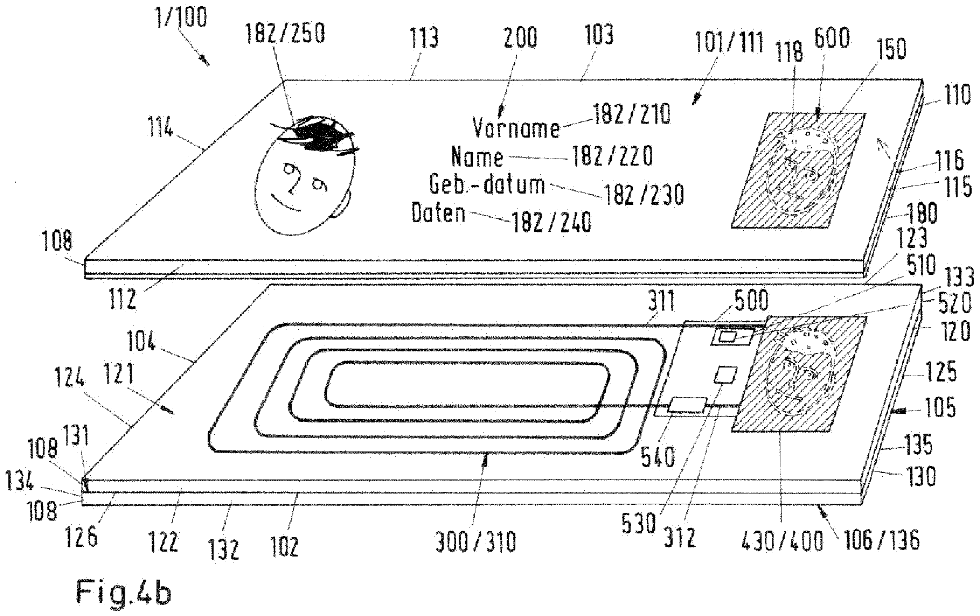

In Fig. 4a und 4b ist eine weitere Ausführungsform dargestellt. Diese weist als Aktuator 400 ein schaltbare elektrochrome Schicht 430 auf. Diese ändert ihre Transmissionseigenschaften für Licht, beispielsweise für Licht im sichtbaren Wellenlängenbereich. Bei der dargestellten Ausführungsform ist die elektrochrome Schicht 430 im nicht bestromten Zustand (Fig. 4a) transparent, d. h., sie weist eine hohe Transmission für Licht im sichtbaren Wellenlängenbereich auf. Im bestromten Zustand (Fig. 4b) des Aktuators 400 ist die elektrochrome Schicht 430 opak, d. h., weist eine geringere Transmission für Licht im sichtbaren Wellenlängenbereich auf.

Bei der dargestellten Ausführungsform sind auch die obere Substratschicht 110, die mittlere Substratschicht 120 und die untere Substratschicht 130 zumindest in dem Bereich 150 transparent, in dem der Aktuator 400 als elektrochrome Schicht 430 ausgebildet ist. Eine oder mehrere gegebenenfalls vorhandene Druckschichten (nicht dargestellt) weisen in diesem Bereich 150 eine Aussparung auf. Im nicht bestromten den Zustand des Aktuators 400 weist der Laminationskörper 100 somit ein transparentes Durchsichtfenster 600 auf.

Eine Ansicht des Laminationskörpers 100 im nicht bestromten Zustand des Aktuators 400 ist in Figur 4a schematisch als Teilexplosionszeichnung dargestellt.

In Figur 4b ist der Laminationskörper nach Fig. 4a mit der bestromten elektrochromen Schicht 430 schematisch als Teilexplosionszeichnung dargestellt. Die elektrochrome Schicht 430 weist lokale Modifikationen, beispielsweise laserinduzierte Veränderungen 118, auf, die gemeinsam in der dargestellten Ausführungsform ein Porträtbild 450 kodieren. An jenen Stellen, an denen die lokalen Modifikationen ausgebildet sind, ist die elektrochrome Schicht 430 sowohl im nicht bestromten wie auch im bestromten Zustand transparent. Im aktiven bestromten Zustand ist somit eine durch die lokalen Modifikationen gebildete Information sichtbar oder erfassbar, die im nicht bestromten Zustand des Aktuators 400 nicht sichtbar oder erfassbar ist.

Sowohl in Fig. 4a als auch 4b sind die lokalen Modifikationen 118 auch in der oberen Substratschicht 100 eingezeichnet, obwohl sie nur der elektrochromen Schicht 430 ausgebildet sind, um die äußere Ansicht des Laminationskörpers 100 bzw. Sicherheitsdokuments 1 anzudeuten. Ebenso und zum selben Zweck ist auch der Kontrastwechsel der elektrochromen Schicht 430 zwischen dem unbestromten Zustand (Fig. 4a) und dem bestromten Zustand (Fig. 4b) auch in der oberen Substratschicht 110 dargestellt im Bereich des Fensters 600 dargestellt.

Da ein Versetzen in den bestromten Zustand des Aktuators 400 nur erfolgt, wenn das mit der Hochfrequenzstrahlung übertragene Verifikationssignal oder die darin kodierte Verifikationsinformation bestimmten Vorgaben entsprechen, wird die über die lokalen Modifikationen gespeicherte Information nur sichtbar und erfassbar, wenn das Verifikationssignal den Vorgaben entspricht.

Bei dem Vergleich des Verifikationssignals bzw. der Verifikationsinformation mit Vorgaben, wird beispielsweise geprüft, ob sich das Verifikationssignal oder die darin kodierte Verifikationsinformation, welche beispielsweise nach einem asymmetrischen kryptografischen Verfahren verschlüsselt ist, entschlüsseln lässt und das entschlüsselte Verifikationssignal oder die darin kodierte Verifikationsinformation einen zulässigen Schaltcode zum Aktivieren des Aktuators 400 liefern.

Lässt sich das Verifikationssignal nicht entschlüsseln oder enthält es bzw. die darin kodierte Verifikationsinformation einen unzulässigen Schaltcode, so kann der Aktuator 400 nicht in den aktiven bestromten Zustand versetzt werden.

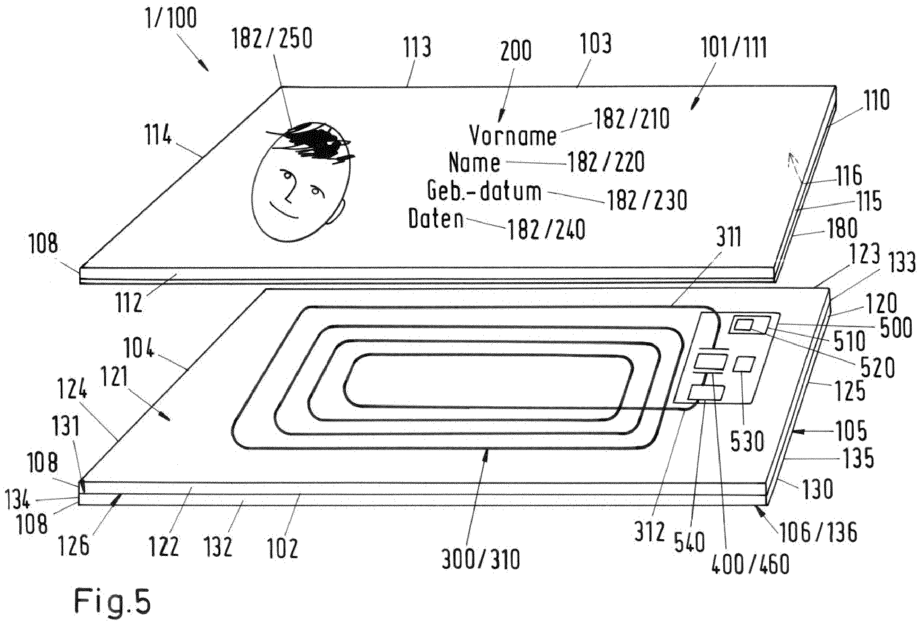

In Figur 5 ist eine weitere Ausführungsform eines Laminationskörpers 100 schematisch als Teilexplosionszeichnung dargestellt. Bei dieser Ausführungsform ist der Aktuator 400 als Schwingquarz 460, beispielsweise als Piezokristall ausgebildet, der im bestromten Zustand in Schwingungen versetzt wird. Hierbei kann über die Ansteuerung der Schaltungsanordnung 500 eine Frequenz und/oder eine Amplitude festgelegt und/oder zeitlich variiert werden. Beispielsweise kann in dem Verifikationssignal oder in der darin kodierte Verifikationsinformation eine zeitliche Abfolge von An- und Abschaltungen des Aktuators codiert sein. Wird das Verifikationssignal bzw. die Verifikationsinformation, welches oder welche aus der Hochfrequenzstrahlung über eine Demodulation extrahiert und als berechtigt klassifiziert worden ist, den Aktuator 400 des Laminationskörpers 100 in den bestromten Zustand zu versetzen, mit einer Sequenz von Schaltinformationen bereitgestellt, so wird der Aktuator beispielsweise mit dieser Sequenz zwischen dem bestromten und dem nicht bestromten Zustand umgeschaltet.

Diese ist auch auf andere Ausführungsformen von Aktuatoren anwendbar.

Bei einer Verifikation kann somit geprüft werden, ob das erfasste Signal, beispielsweise ein optisches Signal, z.B. ein Lichtsignal oder ein akustisches Signal oder auch ein anders Erfassungssignal, eine Sequenz aufweist, die mit einer erwarteten Sequenz übereinstimmt, wie sie mit einem autorisierten Verifikationssignal über die Hochfrequenzstrahlung zu dem Laminationskörper übertragen wird.

Ebenso können über das Verifikationssignal und die darin kodierte Verifikationsinformation Steuerinformationen für den Aktuator 400 übertragen werden, die beispielsweise eine Frequenz und/oder Amplitude der erfassten Eigenschaft, die das Erfassungssignal liefern, variiert werden.

Ist der Aktuator 400 beispielsweise als mehrfarbiges Leuchtmittel 410 ausgebildet, so kann über das Verifikationssignal und die darin kodierte Verifikationsinformation beispielsweise die Farbe oder Wellenlänge des von dem Leuchtmittel 410 emittierten Lichts gesteuert werden. Diese kann sich auch über die Zeit gesteuert ändern. Bei einem als Piezokristall ausgebildeten Aktuator 400 kann beispielsweise eine Amplitude und/oder eine Schwingungsfrequenz gezielt eingestellt und/oder im zeitlichen Verlauf variiert werden. Hierüber können eine Lautstärke und/oder Intensität eines haptischen und/oder akustischen Erfassungssignals oder auch eine Tonhöhe eines akustischen Erfassungssignals festgelegt und/oder variiert werden.

Die Ausführungsformen sind mit drei oder vier selbsttragenden Substratschichten 108 gebildet. Es versteht sich für den Fachmann, dass ein Laminationskörper 100 aus einer größeren Anzahl von Substratschichten 108 zusammengefügt sein kann. Hierbei können die Merkmale auf oder in den unterschiedlichen Substratschichten 108 ausgebildet werden. Das Zusammenfügen erfolgt mittels eines zeitgleichen Einwirkens von Druck- und Energiezufuhr, so dass aus Kunststoffen gebildete Substratschichten 108 sich zumindest stoffschlüssig miteinander verbinden. Hierbei werden die Antennenstruktur 300, die Schaltungsanordnung 500, und das Leuchtmittel 410 im Innern des Laminationskörpers 100 eingeschlossen, so dass diese nicht ohne eine Beschädigung des Laminationskörpers 100 manipuliert werden können.

Eine Verifikation der beschriebenen Laminationskörper 100 und/oder hiermit ausgebildeten Sicherheitsdokumente 1 erfolgt, indem eine elektromagnetische Hochfrequenzstrahlung beispielsweise nach dem NFC-Protokoll auf den Laminationskörper 100 gerichtet wird, so dass diese die im Innern des Laminationskörpers 100 ausgebildete Antennenstruktur 300 durchdringt. Auf die Hochfrequenzstrahlung ist oder wird bei der Erzeugung ein Verifikationssignal moduliert, welches eine Verifikationsinformation kodiert. Eine mit der Antennenstruktur 300 gekoppelte Schaltungsanordnung 500, die über den durch die Hochfrequenzstrahlung in die Antennenstruktur 300 induzierten Storm mit Energie versorgt wird, demoduliert das Verifikationssignal. Das Verifikationssignal bzw. die Verifikationsinformation wird mit Vorgaben verglichen. Beispielsweise kann ein übermittelter Code in einer Vergleichereinrichtung 530 eingespeist werden, die eine Schaltvorrichtung 540 betätigt, wenn der übermittelte Code korrekt ist, d.h. beispielsweise mit einem in der Vergleichereinrichtung 530 gespeicherten Code übereinstimmt. Die Schaltvorrichtung 540 sorgt dann dafür, dass der Aktuator in einen bestromten Zustand versetzt wird. Hierdurch wird eine von außen, d.h. von außerhalb des Laminationskörpers 100, erfassbare physikalische Eigenschaft des Laminationskörpers verändert. Bei einfachen Ausführungsformen wird geprüft, ob diese erfassbare Eigenschaft vorliegt, beispielsweise ein als Lichtquelle ausgebildeter Aktuator Licht emittiert, bei einem als Schwingquarz ausgebildeten Aktuator, ob eine Vibration haptisch oder ein Ton akustisch erfassbar ist, oder bei einem als elektrisch schaltbarer Schicht ausgebildeten Aktuator ein Muster optisch erfassbar ist, sich eine optische Eigenschaft, wie eine Transmission, Remission oder Absorption, oder eine Farbe geändert hat usw.

Bei Weiterbildungen wird mit dem Verifikationssignal eine Information zu dem Laminationskörper übertragen, die nach der Prüfung auf Echtheit des Verifikationssignals eine zeitliche Variation der Bestromung des Aktuators bewirkt. So kann bei einer Mehrfarblichtquelle die Farbe des emittierten Lichts bzw. dessen Wellenlänge im zeitlichen Verlauf geändert werden, eine Intensität kann variiert werden, indem eine An-Aus-Sequenz übermittelt wird oder die Intensität kontinuierlich variiert wird. Bei einem als elektrochrome Schicht ausgebildeten Aktuator, kann die Farbe und/oder die Transparenz zeitlich variiert werden. Bei der Verifikation kann geprüft werden, ob sich die physikalische Eigenschaft gezielt verändert. Ebenso kann geprüft werden, ob die im zeitlichen Verlauf auftretende Variation einer erwarteten Variation entspricht. Jeweils, wenn die erfasste Eigenschaft den Erwartungen entspricht, wird der Laminationskörper als echt oder unversehrt verifiziert.

Auch die oben beschriebenen Effekte im Hinblick auf die Lumineszenz und Eigenschaften von anderen Merkmalen und darin gespeicherte Informationen, können bei der Verifikation herangezogen werden und mit Vorgaben verglichen werden.

Signale, die von Sensoren erfasst werden, die an den physikalischen Effekt oder die Effekte angepasst sind, der oder die durch den bestromten Aktuator verändert wird oder werden, können in einer Auswerteschaltung mit erwarteten Signalen verglichen und hieraus die Verifikationsentscheidung abgeleitet werden, die dann als Ausgabesignal bereitgestellt wird, mit dem beispielsweise eine Zugangsschranke zu einem umgrenzten Bereich geöffnet werden kann etc.

Es versteht sich für den Fachmann, dass hier nur beispielhafte Ausführungsformen beschrieben sind. Die Merkmale der unterschiedlichen Ausführungsformen können beliebig kombiniert werden, um die Erfindung gemäß ihren unterschiedlichen Aspekten auszuführen. Die Erfindung ist definiert durch die nachfolgenden Ansprüche.

### Bezugszeichenliste

- 1: Sicherheitsdokument
- 100: Laminationskörper
- 101: Oberseite des Laminationskörpers
- 102: vordere Seitenkante des Laminationskörpers
- 103: hintere Seitenkante des Laminationskörpers
- 104: linke Seitenkante des Laminationskörpers
- 105: rechte Seitenkante des Laminationskörpers
- 106: Unterseite des Laminationskörpers
- 108: Substratschicht
- 110: obere Substratschicht
- 111: Oberseite der oberen Substratschicht
- 112: vordere Seitenkante der oberen Substratschicht
- 113: hintere Seitenkante der oberen Substratschicht
- 114: linke Seitenkante der oberen Substratschicht
- 115: rechte Seitenkante der oberen Substratschicht
- 116: Unterseite der oberen Substratschicht
- 117: Fensterabschnitt
- 118: laserinduzierte Veränderungen
- 120: mittlere Substratschicht
- 121: Oberseite der mittleren Substratschicht
- 122: vordere Seitenkante der mittleren Substratschicht
- 123: hintere Seitenkante der mittleren Substratschicht
- 124: linke Seitenkante der mittleren Substratschicht
- 125: rechte Seitenkante der mittleren Substratschicht
- 126: Unterseite der mittleren Substratschicht
- 130: untere Substratschicht
- 131: Oberseite der unteren Substratschicht
- 132: vordere Seitenkante der unteren Substratschicht
- 133: hintere Seitenkante der unteren Substratschicht
- 134: linke Seitenkante der unteren Substratschicht
- 135: rechte Seitenkante der unteren Substratschicht
- 136: Unterseite der unteren Substratschicht
- 140: lumineszierende Substratschicht
- 180: Druckschicht
- 182: Bestandteile der Druckschicht
- 184: weitere Bestandteile der Druckschicht
- 186: Unterbereiche der Druckschicht
- 190: Blockierschicht
- 200: individualisierende Informationen
- 210: Vorname
- 220: Name
- 230: Geburtsdatum
- 240: Daten
- 250: Portraitbild
- 270: weiters Musterelement
- 300: Antennenstruktur
- 310: Spule
- 311, 312: Anschlusskontakte
- 400: Aktuator
- 410: Leuchtmittel
- 415: Lichtleiter
- 430: elektrochrome Schicht
- 460: Schwingquarz
- 500: Schaltungsanordnung
- 510: Kommunikationseinrichtung
- 520: Demodulationseinrichtung
- 530: Vergleichereinrichtung
- 540: Schalt- und Steuereinrichtung
- 600: Fenster

## Patentansprüche

1. Laminationskörper (100) umfassend
eine Antennenstruktur (300) zum Empfangen von elektromagnetischer Hochfrequenzstrahlung,
eine mit der Antennenstruktur (300) gekoppelte Schaltungsanordnung (500), welche ausgebildet ist, zumindest eine auf die elektromagnetische Hochfrequenzstrahlung modulierte Verifikationsinformation zu demodulieren und auszuwerten,
einen mit der Schaltungsanordnung (500) gekoppelten elektrisch betreibbaren Aktuator (400), der mittels der Schaltungsanordnung (500) zwischen mindestens einem nicht-bestromten und einem bestromten Zustand umgeschaltet werden kann, in dem der Aktuator (400) mittels eines über die elektromagnetische Hochfrequenzstrahlung in die Antennenstruktur (300) induzierten Stroms bestromt ist, wobei der Aktuator (400) im bestromten Zustand mindestens eine physikalische, von außerhalb des Laminationskörpers (100) erfassbare Eigenschaft des Laminationskörpers (100) gegenüber dem nicht-bestromten Zustand des Aktuators (400) verändert, wobei die Schaltungsanordnung (500) ausgebildet ist, beim Auswerten die demodulierte Verifikationsinformation mit Vorgaben zu vergleichen und der Aktuator (400)
nur in den einen bestromten Zustand zu schalten, wenn die demodulierte Verifikationsinformation den Vorgaben entspricht,
**dadurch gekennzeichnet, dass** die Schaltungsanordnung (500) ausgebildet ist, den Aktuator (400) abhängig von der Verifikationsinformation zeitlich variiert anzusteuern, sodass bei einer Verifikationsinformation, die in Form des Verifikationssignals zeitlich variiert wird, die erfassbare Eigenschaft ein zeitlich variiertes Erfassungssignal liefert, das mit der zeitlichen Variation der Verifikationsinformation korrespondiert.

2. Laminationskörper (100) nach Anspruch 1, **dadurch gekennzeichnet, dass** der Aktuator (400) eine Lichtquelle umfasst, die in dem bestromten Zustand Licht emittiert und in dem nicht-bestromten Zustand kein Licht emittiert, so dass die erfassbare Eigenschaft als ein Erfassungssignal ein Lichtsignal umfasst.

3. Laminationskörper (100) nach Anspruch 2, **dadurch gekennzeichnet, dass** die Lichtquelle eine Mehrfarblichtquelle ist, die ausgebildet ist, im bestromten Zustand gesteuert Licht unterschiedlicher Wellenlängen zu emittieren.

4. Laminationskörper (100) nach Anspruch 2 oder 3, **dadurch gekennzeichnet, dass** eine Materialschicht in dem Laminationskörper (100) so angeordnet ist, dass diese im bestromten Zustand des Aktuators (400) mittels der Lichtquelle hinterleuchtet oder seitlich beleuchtet wird, wobei die Materialschicht an unterschiedlichen Positionen unterschiedliche optische Eigenschaften aufweist, so dass die erfassbare Eigenschaft als ein Erfassungssignal ein Mustersignal umfasst.

5. Laminationskörper (100) nach einem der vorangehenden Ansprüche, **dadurch gekennzeichnet, dass** der Aktuator (400) eine elektrisch schaltbare Schicht umfasst, so dass die erfassbare Eigenschaft als ein Erfassungssignal ein Mustersignal umfasst.

6. Laminationskörper nach einem der vorangehenden Ansprüche, **dadurch gekennzeichnet, dass** der Aktuator (400) einen Schwingquarz umfasst und die Schaltungsanordnung (500) so ausgebildet ist, den Schwingquarz im bestromten Zustand zu akustisch und/oder haptisch wahrnehmbaren Schwingungen anzuregen, so dass die erfassbare Eigenschaft als ein Erfassungssignal ein akustisches und/oder haptisches Schwingungssignal umfasst.

7. Laminationskörper nach einem der Ansprüche 1 bis 5, **dadurch gekennzeichnet, dass** der Aktuator (400) ein Piezoelement umfasst und die Schaltungsanordnung (500) so ausgebildet ist, den das Piezoelement im bestromten Zustand zu akustisch und/oder haptisch wahrnehmbaren Schwingungen anzuregen, so dass die erfassbare Eigenschaft als ein Erfassungssignal ein akustisches und/oder haptisches Schwingungssignal umfasst.

8. Verfahren zum Verifizieren eines Laminationskörpers (100) nach einem der Ansprüche 1 bis 7 umfassend die Schritte:
Erzeugen einer elektromagnetischen Hochfrequenzstrahlung, auf welche ein Verifikationssignal moduliert wird, welches eine Verifikationsinformation kodiert, Einstrahlen der elektromagnetischen Hochfrequenzstrahlung auf einen Laminationskörper (100) in einer Weise, dass die elektromagnetische Hochfrequenzstrahlung eine Antennenstruktur (300) eines Laminationskörpers (100) durchdringt, so dass in der Antennenstruktur (300) ein Strom induziert wird, und eine Schaltungsanordnung (500) des Laminationskörpers mit Energie versorgt wird, und das Verifikationssignal demoduliert und die darin kodierte Verifikationsinformation mit Vorgaben vergleicht und einen Aktuator (400) des Laminationskörpers (100) bestromt, sofern die demodulierte Verifikationsinformation Vorgaben entspricht, und Erfassen mindestens einer Eigenschaft des Laminationskörpers (100) mittels einer Erfassungseinrichtung, Auswerten der mindestens einen erfassten Eigenschaft, wobei geprüft wird, ob die mindestens eine erfasste Eigenschaft mit einer vorgegebenen oder vorbekannten erwarteten Eigenschaft übereinstimmt, die durch den bestromten Aktuator (400) verursacht ist und als echt verifiziert wird, wenn die mindestens eine erfasste Eigenschaft mit einer erwarteten Eigenschaft übereinstimmt, **dadurch gekennzeichnet, dass** das Verifikationssignal zeitlich variiert wird und ein zeitlicher Verlauf der erfassten Eigenschaft als Erfassungssignals ausgewertet und als erwartete Eigenschaft überprüft wird, ob eine zeitliche Variation des Erfassungssignals mit der zeitlichen Variation des Verifikationssignals, die durch die Verifikationsinformation vorgegeben ist, korrespondiert.

9. Verfahren nach Anspruch 8, **dadurch gekennzeichnet, dass** als die mindestens eine Eigenschaft ein Erfassungssignal in Form eines abgestrahlten akustischen und/oder haptischen Signals und/oder in Form eines Lichtsignals, insbesondere in Form eines eindimensionalen oder zweidimensionalen oder dreidimensionalen Lichtmustersignals, umfasst.

## Claims

1. Laminated body (100) comprising
an antenna structure (300) for receiving electromagnetic high-frequency radiation, a circuit arrangement (500) coupled to the antenna structure (300), which is designed to demodulate and evaluate at least one verification information modulated onto the high-frequency electromagnetic radiation, an electrically operable actuator (400) coupled to the circuit arrangement (500), which can be switched by means of the circuit arrangement (500) between at least a non-energized state and an energized state, in which the actuator (400) is powered by means of a current induced by the electromagnetic high-frequency radiation in the antenna structure (300), whereby the actuator (400) in the energized state changes at least one physical property of the lamination body (100) that is detectable from outside the lamination body (100) compared to the non-energized state of the actuator (400),
wherein the circuit arrangement (500) is designed to compare the demodulated verification information with specifications during evaluation and to switch the actuator (400) to the energized state only if the demodulated verification information corresponds to the specifications,
**characterized in that** the circuit arrangement (500) is configured to pilot the actuator (400) in a time-varying manner depending on the verification information, such that in the presence of a verification information, varied in time in the form of the verification signal, the detectable property provides a detection signal varied in time, which corresponds to the time-variation of the verification information.

2. Lamination body (100) according to claim 1, **characterized in that** the actuator (400) comprises a light source that emits light in the energized state and does not emit light in the non-energized state, wherein the detectable property comprises a light signal as a detection signal.

3. Lamination body (100) according to claim 2, **characterized in that** the light source is a multicolor light source that is designed to emit light of different wavelengths in a controlled manner when energized.

4. Laminated body (100) according to claim 2 or 3, **characterized in that** a material layer in the laminated body (100) is arranged such that, when the actuator (400) is energized, it is backlit or side-lit by the light source, wherein the material layer has different optical properties at different positions, so that the detectable property comprises a pattern signal as a detection signal.

5. Lamination body (100) according to one of the preceding claims, **characterized in that** the actuator (400) comprises an electrically switchable layer, so that the detectable property comprises a pattern signal as a detection signal.

6. Lamination body according to one of the preceding claims, **characterized in that** the actuator (400) comprises a quartz crystal oscillator and the circuit arrangement (500) is designed to excite the quartz crystal oscillator in the energized state to produce acoustically and/or haptically perceptible vibrations, so that the detectable property comprises an acoustic and/or haptic vibration signal as a detection signal.

7. Lamination body according to one of claims 1 to 5, **characterized in that** the actuator (400) comprises a piezo element and the circuit arrangement (500) is designed to excite the piezo element in the energized state to produce acoustically and/or haptically perceptible vibrations, so that the detectable property comprises an acoustic and/or haptic vibration signal as a detection signal.

8. Method for verifying a laminated body (100) according to one of claims 1 to 7, comprising the steps:
generating high-frequency electromagnetic radiation onto which a verification signal is modulated, which encodes verification information, irradiating the high-frequency electromagnetic radiation onto a lamination body (100) in such a way that the electromagnetic high-frequency radiation penetrates an antenna structure (300) of a lamination body (100) so that a current is induced in the antenna structure (300), and a circuit arrangement (500) of the laminated body is supplied with energy, and the verification signal is demodulated and the verification information encoded therein is compared with specifications and an actuator (400) of the laminated body (100) is energized if the demodulated verification information corresponds to the specifications, and detecting at least one property of the laminated body (100) by means of a detection device, evaluating the at least one detected property, whereby it is determined whether the at least one detected property corresponds to a predetermined or previously known expected property caused by the energized actuator (400) and it is verified as genuine if the at least one detected property matches an expected property, **characterized in that** the verification signal is varied over time and a time curve of the detected property is evaluated as a detection signal and it is checked as an expected property whether a temporal variation of the detection signal corresponds to the temporal variation of the verification signal specified by the verification information.

9. Method according to claim 8, **characterized in that** the at least one property comprises a detection signal in the form of an emitted acoustic and/or haptic signal and/or in the form of a light signal, in particular in the form of a one-dimensional or two-dimensional or three-dimensional light pattern signal.

## Revendications

1. Corps stratifié (100) comprenant
une structure d'antenne (300) pour recevoir un rayonnement électromagnétique à haute fréquence, un agencement de circuit (500) couplé à la structure d'antenne (300), qui est conçu pour démoduler et évaluer au moins une information de vérification modulée sur le rayonnement électromagnétique à haute fréquence, un actionneur électrique (400) couplé à l'agencement de circuit (500), qui peut être commuté entre au moins un état non alimenté et un état alimenté au moyen du agencement de circuit (500), dans lequel l'actionneur (400) peut être alimenté au moyen d'un rayonnement électromagnétique à haute fréquence dans la structure d'antenne (300) induisant un courant dans l'actionneur (400), de sorte que l'actionneur (400) à l'état alimenté modifie au moins une propriété physique du corps stratifié (100) qui peut être détectée depuis l'extérieur du corps stratifié (100) par rapport à l'état non alimenté de l'actionneur (400),
dans lequel l'agencement de circuit (500) est conçu pour comparer l'information de vérification démodulée avec des spécifications pendant l'évaluation et pour commuter l'actionneur (400) à l'état activé uniquement si l'information de vérification démodulée correspond aux spécifications,
**caractérisé en ce que** l'agencement de circuit (500) est conçu pour piloter l'actionneur (400) de manière variable dans le temps en fonction de l'information de vérification, de sorte qu'en présence d'une information de vérification sous forme de signal de vérification variable dans le temps, la propriété détectable fournit un signal détectable variable dans le temps, correspondant à la variation temporelle de l'information de vérification.

2. Corps stratifié (100) selon la revendication 1, **caractérisé en ce que** l'actionneur (400) comprend une source lumineuse qui émet de la lumière à l'état alimenté et n'émet pas de lumière à l'état non alimenté, de sorte que la propriété détectable comprend un signal détectable sous forme de signal lumineux.

3. Corps stratifié (100) selon la revendication 2, **caractérisé en ce que** la source lumineuse est une source lumineuse multicolore conçue pour émettre de manière contrôlée de la lumière de différentes longueurs d'onde à l'état alimenté.

4. Corps stratifié (100) selon la revendication 2 ou 3, **caractérisé en ce qu'**une couche de matériau dans le corps stratifié (100) est agencée de telle sorte que, dans cas où l'actionneur (400) est alimenté, la couche de matériau est rétroéclairée ou éclairée latéralement par la source lumineuse, dans lequel la couche de matériau présente des propriétés optiques différentes à différentes positions, de sorte que la propriété détectable comprend un signal détectable sous forme de motif.

5. Corps stratifié (100) selon l'une des revendications précédentes, **caractérisé en ce que** l'actionneur (400) comprend une couche commutable électriquement, de sorte que la propriété détectable comprend un signal détectable sous forme de motif.

6. Corps stratifié selon l'une des revendications précédentes, **caractérisé en ce que** l'actionneur (400) comprend un oscillateur à quartz et que l'agencement de circuit (500) est conçu pour exciter l'oscillateur à quartz à l'état alimenté afin de produire des vibrations perceptibles acoustiquement et/ou haptiquement, de sorte que la propriété détectable comprend un signal détectable sous forme de signal de vibration acoustique et/ou haptique.

7. Corps stratifié selon l'une des revendications 1 à 5, **caractérisé en ce que** l'actionneur (400) comprend un élément piézoélectrique et que l'agencement de circuit (500) est conçu pour exciter l'élément piézoélectrique à l'état alimenté afin de produire des vibrations perceptibles acoustiquement et/ou haptiquement, de sorte que la propriété détectable comprend un signal détectable sous forme de signal de vibration acoustique et/ou haptique.

8. Procédé de vérification d'un corps stratifié (100) selon l'une des revendications 1 à 7, comprenant les étapes suivantes:
générer un rayonnement électromagnétique à haute fréquence sur lequel est modulé un signal de vérification qui code une information de vérification, irradier le rayonnement électromagnétique à haute fréquence sur un corps stratifié (100) de telle manière que le rayonnement électromagnétique à haute fréquence pénètre dans une structure d'antenne (300) du corps stratifié (100), de sorte qu'un courant est induit dans la structure d'antenne (300), et un agencement de circuit (500) du corps stratifié est alimenté en énergie, et le signal de vérification est démodulé et l'information de vérification qui y est codée est comparée à des spécifications et un actionneur (400) du corps stratifié (100) est activé si l'information de vérification démodulée correspond aux spécifications, et
détecter au moins une propriété détectable du corps stratifié (100) au moyen d'un dispositif de détection, évaluer la au moins une propriété détectée, vérifier si la au moins une propriété détectée correspond à une propriété attendue prédéterminée ou connue au préalable causée par l'actionneur activé (400) et certifier la au moins une propriété détectée comme authentique si la au moins une propriété détectée correspond à une propriété attendue, **caractérisé en ce que** le signal de vérification est un signal de vérification variable dans le temps et une courbe temporelle de la propriété détectée est évaluée comme un signal détecté et il est vérifié comme une propriété attendue si une variation temporelle du signal détecté correspond à la variation temporelle du signal de vérification spécifiée par l'information de vérification.

9. Procédé selon la revendication 8, **caractérisé en ce que** la au moins une propriété comprend un signal détecté sous forme d'un signal émis acoustique et/ou haptique et/ou sous forme d'un signal lumineux, en particulier sous forme d'un signal lumineux unidimensionnel, bidimensionnel ou tridimensionnel.
